# EUROPEAN PATENT APPLICATION

(11) **EP 3 719 726 A1**
(43) Date of publication of application: **07.10.2020**
(21) Application number: 20163699.0
(22) Date of filing: 17.03.2020
(51) Int. Cl.: G06Q 10/08, G06Q 10/06, G06Q 10/04, G06Q 50/28

(54) **MULTI-LOCATION DELIVERY**

(30) Priority: 01.04.2019 US 201916371772
(71) Applicant: Shopify Inc., Ottawa, Ontario K2P 1L4 (CA)
(72) Inventor: VAN GROOTEL, Maarten, Ottawa, ontario K1G 0W7 (CA); DES LIGNERIS, Benoit, Sherbrooke, québec J1J 1M8 (CA); LEROUX, DANIEL D., Sherbrooke, ontario K2K 3E3 (CA); TZAVELAS, GEORGE, Carp, ontario K0A 1L0 (CA)
(74) Representative: Hanna Moore + Curley

(57) **Abstract**

Methods and systems for determining product fulfillment options for products in an e-commerce system or shopping cart. Delivery profiles from a delivery profile database are used, wherein the delivery profile is specific to the products and contains inventory locations and delivery zones. Priority basis determination of recommended options is utilized.

## Description

### FIELD

The present disclosure relates to advancements in e-commerce systems and methods for determining product fulfillment options for the delivery of products purchased on-line.

### BACKGROUND

With the growth of online sales, modern e-commerce platforms must quickly and reliably provide information to a customer regarding a prospective purchase, so that the customer can complete the transaction before their patience is tested, otherwise the customer or transaction may be lost. As such, particularly in international online transactions, it is important that an e-commerce platform be capable of rendering near instant results for inventory locations, delivery zones and shipping rates. Thus, what is needed is an advancement in the way inventory information and shipping information is obtained and processed in connection with a customer with a prospective purchase.

### SUMMARY

In an aspect, a method may include determining an option for fulfillment of a prospective order comprising: identifying a product and a destination from the prospective order; retrieving a delivery profile, the delivery profile comprising: (i) an inventory location of the product, (ii) a delivery zone where the product can be shipped from the inventory location, and (iii) one or more fulfillment options, wherein the one or more fulfillment options may include one or more shipping rates to ship the product from the inventory location to the delivery zone; and, determining the option from the one or more fulfillment options based upon a priority basis. In embodiments, the method delivery profile may be retrieved from a delivery profile database. The delivery profile may be retrieved from a delivery profile record stored in a delivery profile database. Each shipping rate in the one or more shipping rates may include a shipping provider, a shipping service and a shipping cost. The product may be a plurality of different products and the delivery profile may be a plurality of different delivery profiles corresponding to the plurality of different products. The inventory location may be a plurality of inventory locations. The option may be a plurality of options based on the plurality of inventory locations. The delivery zone may be a plurality of delivery zones. The one or more shipping rates may be a plurality of shipping rates. The option may be a plurality of options based on the plurality of shipping rates. A country of the destination may be different than the inventory location. The option for the prospective order may include no fulfillment options to the destination. The priority basis may be lowest shipping cost. The priority basis may be fastest delivery time. The priority basis may be shortest geographic distance. The method may further include communicating the option to a customer device. The customer device may be a mobile device. The method may further include: determining an inventory information request to be requested based upon the inventory location, the delivery zone and the one or more fulfillment options of the delivery profile and the destination; requesting inventory information via the inventory information request; receiving inventory information in response to the inventory information request and, wherein the priority basis also considers the inventory information to determine an option. The inventory information request may be an API call. The inventory information request may be an API call external to an e-commerce platform. The method may further include: determining a shipping information request to be requested based upon the inventory location, the delivery zone and the one or more fulfillment options of the delivery profile and the destination; requesting shipping information via the shipping information request; receiving shipping information; and, wherein the priority basis also considers the shipping information. The shipping information request may be an API call. The shipping information request may be an API call external to an e-commerce platform. The delivery profile may be a plurality of delivery profiles and the shipping information request may be a plurality of shipping information requests corresponding to the plurality of delivery profiles. The plurality of shipping information requests may be a plurality of API calls. The plurality of shipping information requests may be a plurality of API calls external to an e-commerce platform. The inventory location may be a plurality of inventory locations; the delivery zone may be a plurality of delivery zones; and, the shipping information request may be a plurality of shipping information requests. The plurality of shipping information requests may be a plurality of API calls. The plurality of shipping information requests may be a plurality of API calls external to an e-commerce platform. At least one of the plurality of shipping information requests may be an API call to a shipping provider. The method may further include: determining an inventory information request to be requested based upon the inventory location, the delivery zone and the one or more fulfillment options of the delivery profile and the destination; requesting inventory information via the inventory information request; receiving inventory information in response to the inventory information request; determining a shipping information request to be requested from the inventory location, the delivery zone and the one or more fulfillment options of the delivery profile, the inventory information received and the destination; requesting shipping information via the shipping information request; and, wherein the priority basis also considers the inventory information and the shipping information. The shipping information may include a shipping provider, a shipping service and a shipping cost. The inventory information may be requested via an API call to an inventory provider. The inventory location may be external to an e-commerce platform. The shipping information may be requested via an API call to a shipping provider. The shipping provider may be external to an e-commerce platform. The method may further include: determining an inventory information request to be requested from the inventory location, the delivery zone and the one or more fulfillment options of the delivery profile and the destination; requesting inventory information via the inventory information request; receiving inventory information in response to the inventory information request regarding the inventory location having available inventory of the product; disregarding the inventory location if it does not have available inventory of the product; determining a shipping information request to be requested from the inventory location, the delivery zone and the one or more fulfillment options of the delivery profile; requesting shipping information via the shipping information request, wherein the shipping information request may be made via an API call external to an e-commerce platform; receiving shipping information in response to the shipping information request; communicating the option to a customer device; wherein the delivery profile may be retrieved from a delivery profile database; wherein the product may be a plurality of different products; wherein the delivery profile may be a plurality of delivery profiles corresponding to the plurality of different products; wherein the inventory location may be a plurality of inventory locations; wherein the delivery zone may be a plurality of delivery zones; wherein each shipping rate in the one or more shipping rates may include a shipping provider, a shipping service and a shipping cost; wherein the one or more shipping rates may be a plurality of shipping rates; wherein the shipping information may include a shipping provider, a shipping service and a shipping cost; wherein the shipping information request may be a plurality of shipping information requests; wherein the priority basis also considers the inventory information and the shipping information; and wherein the option for fulfillment of the prospective order may be a plurality of options.

In an aspect, a method may include determining an option for fulfillment of a prospective order in an e-commerce platform comprising: identifying the prospective order to deliver one or more products to a destination; retrieving one or more delivery profiles, the one or more delivery profiles comprising: (i) one or more inventory locations of the one or more products, (ii) one or more delivery zones where the one or more products can be shipped from the one or more inventory locations, and (iii) one or more fulfillment options, wherein the one or more fulfillment options comprise one or more shipping rates to ship the one or more products from the one or more inventory locations to the one or more delivery zones; determining a plurality of shipping information requests to be requested based on the one or more inventory locations, the one or more delivery zones and the one or more fulfillment options of the one or more delivery profiles and the destination; requesting shipping information via the plurality of shipping information requests, wherein the plurality of shipping information requests comprise at least one shipping information request that may be an API call external to the e-commerce platform; receiving shipping information in response to the plurality of shipping information requests; and, determining the option from the one or more inventory locations, the one or more delivery zones, the one or more fulfillment options and the shipping information based upon a priority basis. In embodiments, the one or more delivery profiles may be retrieved from a delivery profile database. The one or more delivery profiles may be retrieved from one or more delivery profile records stored in a delivery profile database. The country of the destination may be different than one of the one or more inventory locations. The option may include a plurality of fulfillment options. The option for the prospective order may include no available fulfillment options. The priority basis may be lowest shipping cost. The priority basis may be fastest delivery time. The priority basis may be shortest geographic distance. The plurality of shipping information requests may be made immediately following the determination of utility of the plurality of shipping information requests. The method may further include communicating the option to a customer device. The customer device may be a mobile device. The method may further include: determining a plurality of inventory information requests to be requested based upon the one or more inventory locations, the one or more delivery zones and the one or more fulfillment options of the one or more delivery profiles and the destination; requesting inventory information via the plurality of inventory information requests; receiving inventory information; wherein the step of determining a plurality of shipping information requests considers the inventory information to determine the shipping information requests; and, wherein the priority basis also considers the inventory information to determine an option. The method may further include: determining a plurality of inventory information requests to be requested based upon the one or more inventory locations, the one or more delivery zones and the one or more fulfillment options of the one or more delivery profiles and the destination; requesting inventory information via the plurality of inventory information requests; receiving inventory information; disregarding inventory locations that do not have available inventory of the one or more products; communicating the option to a customer device; wherein the one or more delivery profiles may be retrieved from one or more delivery profile records stored in a delivery profile database; wherein a country of the destination may be different than at least one of the one or more inventory locations; wherein each shipping rate in the one or more shipping rates may include a shipping provider, a shipping service and a shipping cost; and, wherein the priority basis also considers the inventory information and the shipping information.

In an aspect, a system may include determining an option for fulfillment of a prospective order comprising: an e-commerce platform comprising at least one processor and at least one memory, the e-commerce platform adapted to: identify a product and a destination from the prospective order; retrieve a delivery profile, the delivery profile comprising: (i) an inventory location of the product, (ii) a delivery zone where the product can be shipped from the inventory location, and (iii) one or more fulfillment options, wherein the one or more fulfillment options may include one or more shipping rates to ship the product from the inventory location to the delivery zone; and, determine the option from the one or more fulfillment options based upon a priority basis. The system may further include a delivery profile database, wherein the delivery profile may be retrieved from the delivery profile database. The system may further include a delivery profile database, wherein the delivery profile may be retrieved from a delivery profile record stored in a delivery profile database. Each shipping rate in the one or more shipping rates may include a shipping provider, a shipping service and a shipping cost. The product may be a plurality of different products and the delivery profile may be a plurality of different delivery profiles corresponding to the plurality of different products. The inventory location may be a plurality of inventory locations. The option may be a plurality of options based on the plurality of inventory locations. The delivery zone may be a plurality of delivery zones. The one or more shipping rates may be a plurality of shipping rates. The option may be a plurality of options based on the plurality of shipping rates. A country of the destination may be different than the inventory location. The option for the prospective order may include no fulfillment options to the destination. The priority basis may be lowest shipping cost. The priority basis may be fastest delivery time. The priority basis may be shortest geographic distance. The system may be further adapted to communicate the option to a customer device. The customer device may be a mobile device. The system may be further adapted to: determine an inventory information request to be requested based upon the inventory location, the delivery zone and the one or more fulfillment options of the delivery profile and the destination; request inventory information via the inventory information request; receive inventory information in response to the inventory information request and, wherein the priority basis also considers the inventory information to determine an option. The inventory information request may be an API call. The inventory information request may be an API call external to an e-commerce platform. The system may be further adapted to: determine a shipping information request to be requested based upon the inventory location, the delivery zone and the one or more fulfillment options of the delivery profile and the destination; request shipping information via the shipping information request; receive shipping information; and, wherein the priority basis also considers the shipping information. The shipping information request may be an API call. The shipping information request may be an API call external to an e-commerce platform. The delivery profile may be a plurality of delivery profiles and the shipping information request may be a plurality of shipping information requests corresponding to the plurality of delivery profiles. The plurality of shipping information requests may be a plurality of API calls. The plurality of shipping information requests may be a plurality of API calls external to an e-commerce platform. The inventory location may be a plurality of inventory locations; the delivery zone may be a plurality of delivery zones; and the shipping information request may be a plurality of shipping information requests. The plurality of shipping information requests may be a plurality of API calls. The plurality of shipping information requests may be a plurality of API calls external to an e-commerce platform. At least one of the plurality of shipping information requests may be an API call to a shipping provider. The system may be further adapted to: determine an inventory information request to be requested based upon the inventory location, the delivery zone and the one or more fulfillment options of the delivery profile and the destination; request inventory information via the inventory information request; receive inventory information in response to the inventory information request; determine a shipping information request to be requested from the inventory location, the delivery zone and the one or more fulfillment options of the delivery profile, the inventory information received and the destination; request shipping information via the shipping information request; and, wherein the priority basis also considers the inventory information and the shipping information. The shipping information may include a shipping provider, a shipping service and a shipping cost. The inventory information may be requested via an API call to an inventory provider. The inventory location may be external to an e-commerce platform. The shipping information may be requested via an API call to a shipping provider. The shipping provider may be external to an e-commerce platform. The system may be further adapted to: determine an inventory information request to be requested from the inventory location, the delivery zone and the one or more fulfillment options of the delivery profile and the destination; request inventory information via the inventory information request; receive inventory information in response to the inventory information request regarding the inventory location having available inventory of the product; disregard the inventory location if it does not have available inventory of the product; determine a shipping information request to be requested from the inventory location, the delivery zone and the one or more fulfillment options of the delivery profile; request shipping information via the shipping information request, wherein the shipping information request may be made via an API call external to an e-commerce platform; receive shipping information in response to the shipping information request; communicate the option to a customer device; wherein the delivery profile may be retrieved from a delivery profile database; wherein the product may be a plurality of different products; wherein the delivery profile may be a plurality of delivery profiles corresponding to the plurality of different products; wherein the inventory location may be a plurality of inventory locations; wherein the delivery zone may be a plurality of delivery zones; wherein each shipping rate in the one or more shipping rates may include a shipping provider, a shipping service and a shipping cost; wherein the one or more shipping rates may be a plurality of shipping rates; wherein the shipping information may include a shipping provider, a shipping service and a shipping cost; wherein the shipping information request may be a plurality of shipping information requests; wherein the priority basis also considers the inventory information and the shipping information; and wherein the option for fulfillment of the prospective order may be a plurality of options.

In an aspect, a system may include determining an option for fulfillment of a prospective order comprising: an e-commerce platform comprising at least one processor and at least one memory, the e-commerce platform adapted to: identify the prospective order to deliver one or more products to a destination; retrieve one or more delivery profiles, the one or more delivery profiles comprising: (i) one or more inventory locations of the one or more products, (ii) one or more delivery zones where the one or more products can be shipped from the one or more inventory locations, and (iii) one or more fulfillment options, wherein the one or more fulfillment options comprise one or more shipping rates to ship the one or more products from the one or more inventory locations to the one or more delivery zones; determine a plurality of shipping information requests to be requested based on the one or more inventory locations, the one or more delivery zones and the one or more fulfillment options of the one or more delivery profiles and the destination; request shipping information via the plurality of shipping information requests, wherein the plurality of shipping information requests comprise at least one shipping information request that may be an API call external to the e-commerce platform; receive shipping information in response to the plurality of shipping information requests; and, determine the option from the one or more inventory locations, the one or more delivery zones, the one or more fulfillment options and the shipping information based upon a priority basis. The one or more delivery profiles may be retrieved from a delivery profile database. The one or more delivery profiles may be retrieved from one or more delivery profile records stored in a delivery profile database. A country of the destination may be different than one of the one or more inventory locations. The option may include a plurality of fulfillment options. The option for the prospective order may include no available fulfillment options. The priority basis may be lowest shipping cost. The priority basis may be fastest delivery time. The priority basis may be shortest geographic distance. The plurality of shipping information requests may be made immediately following the determination of utility of the plurality of shipping information requests. The system may be further adapted to communicate the option to a customer device. The customer device may be a mobile device. The system may be further adapted to: determine a plurality of inventory information requests to be requested based upon the one or more inventory locations, the one or more delivery zones and the one or more fulfillment options of the one or more delivery profiles and the destination; request inventory information via the plurality of inventory information requests; receive inventory information; wherein the step to determine a plurality of shipping information requests considers the inventory information to determine the shipping information requests; and, wherein the priority basis also considers the inventory information to determine an option. The system may be further adapted to: determine a plurality of inventory information requests to be requested based upon the one or more inventory locations, the one or more delivery zones and the one or more fulfillment options of the one or more delivery profiles and the destination; request inventory information via the plurality of inventory information requests; receive inventory information; disregard inventory locations that do not have available inventory of the one or more products; communicate the option to a customer device; wherein the one or more delivery profiles may be retrieved from one or more delivery profile records stored in a delivery profile database; wherein a country of the destination may be different than at least one of the one or more inventory locations; wherein each shipping rate in the one or more shipping rates may include a shipping provider, a shipping service and a shipping cost; and, wherein the priority basis also considers the inventory information and the shipping information.

In an aspect, a method of determining an option for delivering a product to a destination or customer to fulfill a prospective order may include: identifying a product and a destination from the prospective order; retrieving a delivery profile from a delivery profile database, the delivery profile corresponding to the identified product, the delivery profile comprising: (i) one or more inventory locations of the product, (ii) at least one delivery zone where the product can be shipped from the inventory location, and (iii) one or more shipping rates for one or more shipping providers to ship the product from an inventory location of the one or more inventory locations to the delivery zone; and, determining an option for delivering the product on a priority basis based upon the delivery profile. The method may further include: determining whether to send an inventory information request to one or more inventory locations identified in the delivery profile; when it is determined to send an inventory information request to an inventory location identified in the delivery profile, sending the inventory information request; receiving inventory information in response to the request; and determining an option for delivering the product on a priority basis based on the received inventory information. The method may further include, wherein, if received inventory information indicates that inventory of a product is not available at the inventory location, disregarding the inventory location when determining an option for delivering the product. The method may further include, wherein, when sending an inventory information request to two or more inventory locations identified in the delivery profile, sending the inventory location requests in parallel. The method may further include: determining whether to send a shipping information request to the one or more shipping providers identified in the delivery profile; when it is determined to send a shipping information request to a shipping provider identified in the delivery profile, sending the shipping information request; receiving shipping information in response to request; and determining an option for delivering the product on a priority basis based on the received shipping information. The method may further include: determining whether to send a shipping information request to a shipping provider located at an inventory location for which inventory information has been received, wherein the determination is based on the received inventory information, and wherein, if the received inventory information indicates that inventory of a product is available at the inventory location, determining to send a shipping information request to the shipping provider; or if the received inventory information indicates that inventory of a product is not available at the inventory location, determining not to send a shipping information request to the shipping provider. The method may further include wherein, when sending a shipping information request to two or more shipping providers identified in the delivery profile, sending the shipping information requests in parallel. The method may further include, wherein determining the option for delivery comprises: when it is determined not to send any information requests, determining an option for delivering the product on a priority basis from the delivery profile. The method may further include, wherein the product is a plurality of different products and the delivery profile is a plurality of different delivery profiles corresponding to the plurality of different products, and/or wherein the delivery zone is a plurality of delivery zones. The method may further include, wherein the inventory location is a plurality of inventory locations and wherein the option is a plurality of options based on the plurality of inventory locations, and/or wherein the one or more shipping rates is a plurality of shipping rates and wherein the option is a plurality of options based on the plurality of shipping rates. The method may further include, wherein the option for the prospective order comprises no fulfillment options to the destination. The method may further include, wherein the priority basis is lowest shipping cost. The method may further include: determining an inventory information request to be requested based upon the inventory location, the delivery zone and the one or more shipping rates of the delivery profile; requesting inventory information via the inventory information request; receiving inventory information in response to the inventory information request and, wherein the priority basis also considers the inventory information to determine an option. The method may further include: determining a shipping information request to be requested based upon the inventory location, the delivery zone and the one or more shipping rates of the delivery profile; requesting shipping information via the shipping information request; receiving shipping information; and, wherein the priority basis also considers the shipping information. The aspect may also relate to an apparatus for carrying out the method of discussed above.

### BRIEF DESCRIPTION OF THE DRAWINGS

Fig. 1 depicts an embodiment of an e-commerce platform.
Fig. 2 depicts an embodiment of a home page of an administrator.
Fig. 3 is a flowchart depicting a prior art approach.
Fig. 4 is a flowchart depicting an embodiment of determination of fulfillment options.
Fig. 5 depicts a logical architecture of an embodiment of determination of fulfillment options.
Fig. 6 depicts an embodiment of two delivery profiles.
Figs. 7-10 illustrate embodiments of sample prospective orders based on the delivery profiles of Fig. 6.

### DETAILED DESCRIPTION

The present disclosure will now be described in detail by describing various illustrative, non-limiting embodiments thereof with reference to the accompanying drawings and exhibits. The disclosure may, however, be embodied in many different forms and should not be construed as being limited to the illustrative embodiments set forth herein. Rather, the embodiments are provided so that this disclosure will be thorough and will fully convey the concept of the disclosure to those skilled in the art.

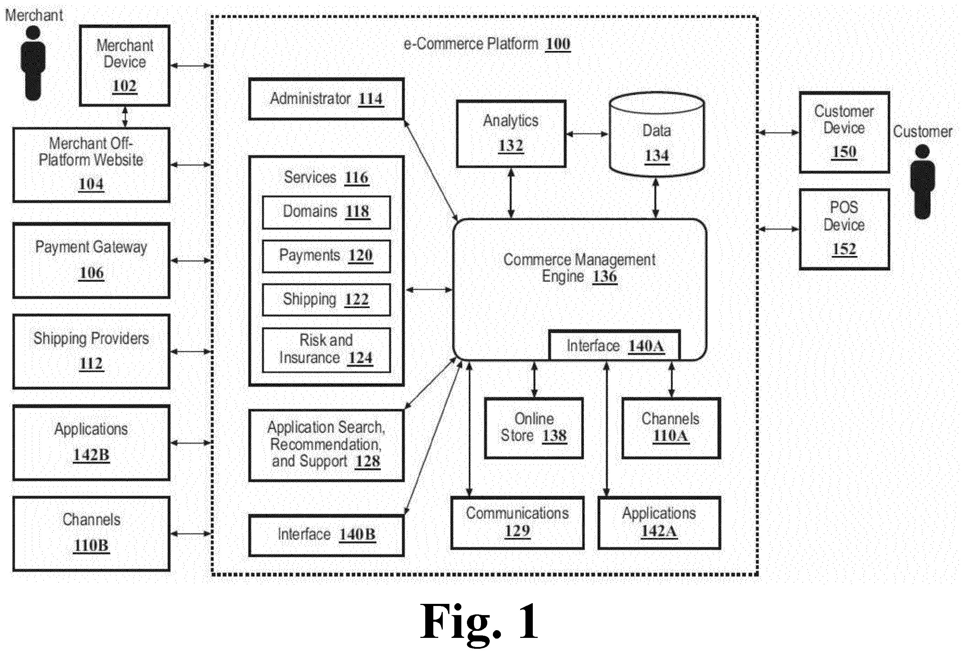

With reference to Fig. 1, an embodiment e-commerce platform 100 is depicted for providing merchant products and services to customers. While the disclosure throughout contemplates using the apparatus, system, and process disclosed to purchase products and services, for simplicity the description herein will refer to products. All references to products throughout this disclosure should also be understood to be references to products and/or services, including physical products, digital content, tickets, subscriptions, services to be provided, and the like.

While the disclosure throughout contemplates that a 'merchant' and a 'customer' may be more than individuals, for simplicity the description herein may generally refer to merchants and customers as such. All references to merchants and customers throughout this disclosure should also be understood to be references to groups of individuals, companies, corporations, computing entities, and the like, and may represent for-profit or not-for-profit exchange of products. Further, while the disclosure throughout refers to 'merchants' and 'customers', and describes their roles as such, the e-commerce platform 100 should be understood to more generally support users in an e-commerce environment, and all references to merchants and customers throughout this disclosure should also be understood to be references to users, such as where a user is a merchant-user (e.g., a seller, retailer, wholesaler, or provider of products), a customer-user (e.g., a buyer, purchase agent, or user of products), a prospective user (e.g., a user browsing and not yet committed to a purchase, a user evaluating the e-commerce platform 100 for potential use in marketing and selling products, and the like), a service provider user (e.g., a shipping provider 112, a financial provider, and the like), a company or corporate user (e.g., a company representative for purchase, sales, or use of products; an enterprise user; a customer relations or customer management agent, and the like), an information technology user, a computing entity user (e.g., a computing bot for purchase, sales, or use of products), and the like.

The e-commerce platform 100 may provide a centralized system for providing merchants with online resources and facilities for managing their business. The facilities described herein may be deployed in part or in whole through a machine that executes computer software, modules, program codes, and/or instructions on one or more processors which may be part of or external to the platform 100. Merchants may utilize the e-commerce platform 100 for managing commerce with customers, such as by implementing an e-commerce experience with customers through an online store 138, through channels 110A-B, through POS devices 152 in physical locations (e.g., a physical storefront or other location such as through a kiosk, terminal, reader, printer, 3D printer, and the like), by managing their business through the e-commerce platform 100, and by interacting with customers through a communications facility 129 of the e-commerce platform 100, or any combination thereof A merchant may utilize the e-commerce platform 100 as a sole commerce presence with customers, or in conjunction with other merchant commerce facilities, such as through a physical store (e.g., 'brick-and-mortar' retail stores), a merchant off-platform website 104 (e.g., a commerce Internet website or other internet or web property or asset supported by or on behalf of the merchant separately from the e-commerce platform), and the like. However, even these 'other' merchant commerce facilities may be incorporated into the e-commerce platform, such as where POS devices 152 in a physical store of a merchant are linked into the e-commerce platform 100, where a merchant off-platform website 104 is tied into the e-commerce platform 100, such as through 'buy buttons' that link content from the merchant off platform website 104 to the online store 138, and the like.

The online store 138 may represent a multitenant facility comprising a plurality of virtual storefronts. In embodiments, merchants may manage one or more storefronts in the online store 138, such as through a merchant device 102 (e.g., computer, laptop computer, mobile computing device, and the like), and offer products to customers through a number of different channels 110A-B (e.g., an online store 138; a physical storefront through a POS device 152; electronic marketplace, through an electronic buy button integrated into a website or social media channel such as on a social network, social media page, social media messaging system; and the like). A merchant may sell across channels 110A-B and then manage their sales through the e-commerce platform 100, where channels 110A may be provided internal to the e-commerce platform 100 or from outside the e-commerce channel 110B. A merchant may sell in their physical retail store, at pop ups, through wholesale, over the phone, and the like, and then manage their sales through the e-commerce platform 100. A merchant may employ all or any combination of these, such as maintaining a business through a physical storefront utilizing POS devices 152, maintaining a virtual storefront through the online store 138, and utilizing a communication facility 129 to leverage customer interactions and analytics 132 to improve the probability of sales. Throughout this disclosure the terms online store 138 and storefront may be used synonymously to refer to a merchant's online e-commerce offering presence through the e-commerce platform 100, where an online store 138 may refer to the multitenant collection of storefronts supported by the e-commerce platform 100 (e.g., for a plurality of merchants) or to an individual merchant's storefront (e.g., a merchant's online store).

In embodiments, a customer may interact through a customer device 150 (e.g., computer, laptop computer, mobile computing device, and the like), a POS device 152 (e.g., retail device, a kiosk, an automated checkout system, and the like), or any other commerce interface device known in the art. The e-commerce platform 100 may enable merchants to reach customers through the online store 138, through POS devices 152 in physical locations (e.g., a merchant's storefront or elsewhere), to promote commerce with customers through dialog via electronic communication facility 129, and the like, providing a system for reaching customers and facilitating merchant services for the real or virtual pathways available for reaching and interacting with customers.

In embodiments, and as described further herein, the e-commerce platform 100 may be implemented through a processing facility including a processor and a memory, the processing facility storing a set of instructions that, when executed, cause the e-commerce platform 100 to perform the e-commerce and support functions as described herein. The processing facility may be part of a server, client, network infrastructure, mobile computing platform, cloud computing platform, stationary computing platform, or other computing platform, and provide electronic connectivity and communications between and amongst the electronic components of the e-commerce platform 100, merchant devices 102, payment gateways 106, application developers, channels 110A-B, shipping providers 112, customer devices 150, point of sale devices 152, and the like. The e-commerce platform 100 may be implemented as a cloud computing service, a software as a service (SaaS), infrastructure as a service (IaaS), platform as a service (PaaS), desktop as a Service (DaaS), managed software as a service (MSaaS), mobile backend as a service (MBaaS), information technology management as a service (ITMaaS), and the like, such as in a software and delivery model in which software is licensed on a subscription basis and centrally hosted (e.g., accessed by users using a client (for example, a thin client) via a web browser or other application, accessed through by POS devices, and the like). In embodiments, elements of the e-commerce platform 100 may be implemented to operate on various platforms and operating systems, such as iOS, Android, on the web, and the like (e.g., the administrator 114 being implemented in multiple instances for a given online store for iOS, Android, and for the web, each with similar functionality).

In embodiments, the online store 138 may be served to a customer device 150 through a webpage provided by a server of the e-commerce platform 100. The server may receive a request for the webpage from a browser or other application installed on the customer device 150, where the browser (or other application) connects to the server through an IP Address, the IP address obtained by translating a domain name. In return, the server sends back the requested webpage. Webpages may be written in or include Hypertext Markup Language (HTML), template language, JavaScript, and the like, or any combination thereof. For instance, HTML is a computer language that describes static information for the webpage, such as the layout, format, and content of the webpage. Website designers and developers may use the template language to build webpages that combine static content, which is the same on multiple pages, and dynamic content, which changes from one page to the next. A template language may make it possible to re-use the static elements that define the layout of a webpage, while dynamically populating the page with data from an online store. The static elements may be written in HTML, and the dynamic elements written in the template language. The template language elements in a file may act as placeholders, such that the code in the file is compiled and sent to the customer device 150 and then the template language is replaced by data from the online store 138, such as when a theme is installed. The template and themes may consider tags, objects, and filters. The client device web browser (or other application) then renders the page accordingly.

In embodiments, online stores 138 may be served by the e-commerce platform 100 to customers, where customers can browse and purchase the various products available (e.g., add them to a cart, purchase immediately through a buy-button, and the like). Online stores 138 may be served to customers in a transparent fashion without customers necessarily being aware that it is being provided through the e-commerce platform 100 (rather than directly from the merchant). Merchants may use a merchant configurable domain name, a customizable HTML theme, and the like, to customize their online store 138. Merchants may customize the look and feel of their website through a theme system, such as where merchants can select and change the look and feel of their online store 138 by changing their theme while having the same underlying product and business data shown within the online store's product hierarchy. Themes may be further customized through a theme editor, a design interface that enables users to customize their website's design with flexibility. Themes may also be customized using theme-specific settings that change aspects, such as specific colors, fonts, and pre-built layout schemes. The online store may implement a content management system for website content. Merchants may author blog posts or static pages and publish them to their online store 138, such as through blogs, articles, and the like, as well as configure navigation menus. Merchants may upload images (e.g., for products), video, content, data, and the like to the e-commerce platform 100, such as for storage by the system (e.g. as data 134). In embodiments, the e-commerce platform 100 may provide functions for resizing images, associating an image with a product, adding and associating text with an image, adding an image for a new product variant, protecting images, and the like.

As described herein, the e-commerce platform 100 may provide merchants with transactional facilities for products through a number of different channels 110A-B, including the online store 138, over the telephone, as well as through physical POS devices 152 as described herein. The e-commerce platform 100 may include business support services 116, an administrator 114, and the like associated with running an on-line business, such as providing a domain service 118 associated with their online store, payment services 120 for facilitating transactions with a customer, shipping services 122 for providing customer shipping options for purchased products, risk and insurance services 124 associated with product protection and liability, merchant billing, and the like. Services 116 may be provided via the e-commerce platform 100 or in association with external facilities, such as through a payment gateway 106 for payment processing, shipping providers 112 for expediting the shipment of products, and the like.

In embodiments, the e-commerce platform 100 may provide for integrated shipping services 122 (e.g., through an e-commerce platform shipping facility or through a third-party shipping carrier), such as providing merchants with real-time updates, tracking, automatic rate calculation, bulk order preparation, label printing, and the like.

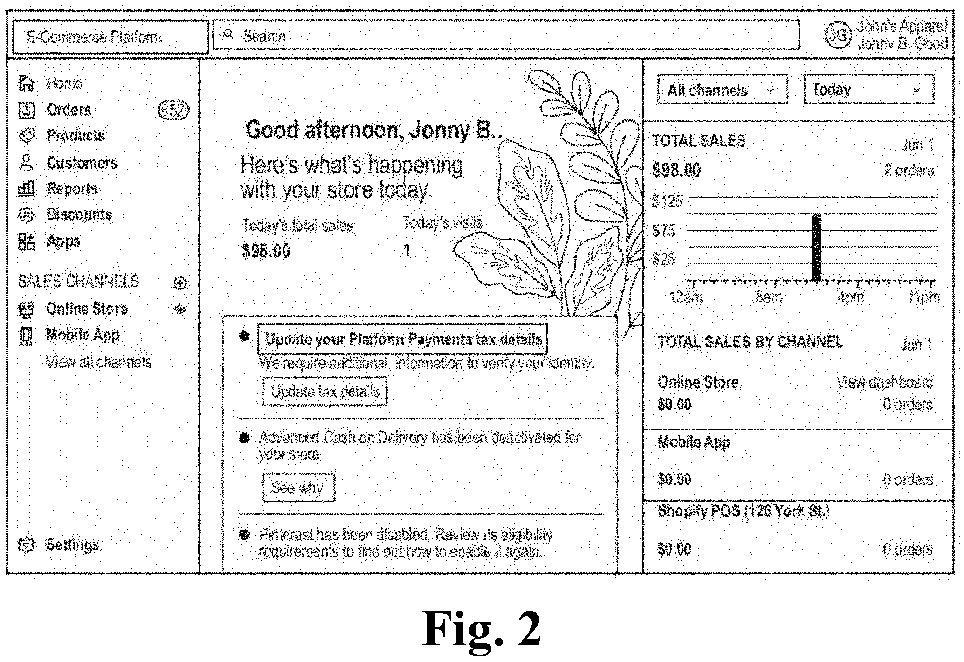

Fig. 2 depicts a non-limiting embodiment for a home page of an administrator 114, which may show information about daily tasks, a store's recent activity, and the next steps a merchant can take to build their business. In embodiments, a merchant may log in to administrator 114 via a merchant device 102 such as from a desktop computer or mobile device, and manage aspects of their online store 138, such as viewing the online store's 138 recent activity, updating the online store's 138 catalog, managing orders, recent visits activity, total orders activity, and the like. In embodiments, the merchant may be able to access the different sections of administrator 114 by using the sidebar, such as shown on Fig. 2. Sections of the administrator 114 may include various interfaces for accessing and managing core aspects of a merchant's business, including orders, products, customers, available reports and discounts. The administrator 114 may also include interfaces for managing sales channels for a store including the online store, mobile application(s) made available to customers for accessing the store (Mobile App), POS devices, and/or a buy button. The administrator 114 may also include interfaces for managing applications (Apps) installed on the merchant's account; settings applied to a merchant's online store 138 and account. A merchant may use a search bar to find products, pages, or other information. Depending on the device 102 or software application the merchant is using, they may be enabled for different functionality through the administrator 114. For instance, if a merchant logs in to the administrator 114 from a browser, they may be able to manage all aspects of their online store 138. If the merchant logs in from their mobile device (e.g. via a mobile application), they may be able to view all or a subset of the aspects of their online store 138, such as viewing the online store's 138 recent activity, updating the online store's 138 catalog, managing orders, and the like.

More detailed information about commerce and visitors to a merchant's online store 138 may be viewed through acquisition reports or metrics, such as displaying a sales summary for the merchant's overall business, specific sales and engagement data for active sales channels, and the like. Reports may include, acquisition reports, behavior reports, customer reports, finance reports, marketing reports, sales reports, custom reports, and the like. The merchant may be able to view sales data for different channels 110A-B from different periods of time (e.g., days, weeks, months, and the like), such as by using drop-down menus. An overview dashboard may be provided for a merchant that wants a more detailed view of the store's sales and engagement data. An activity feed in the home metrics section may be provided to illustrate an overview of the activity on the merchant's account. For example, by clicking on a 'view all recent activity' dashboard button, the merchant may be able to see a longer feed of recent activity on their account. A home page may show notifications about the merchant's online store 138, such as based on account status, growth, recent customer activity, and the like. Notifications may be provided to assist a merchant with navigating through a process, such as capturing a payment, marking an order as fulfilled, archiving an order that is complete, and the like.

The e-commerce platform 100 may provide for a communications facility 129 and associated merchant interface for providing electronic communications and marketing, such as utilizing an electronic messaging aggregation facility for collecting and analyzing communication interactions between merchants, customers, merchant devices 102, customer devices 150, POS devices 152, and the like, to aggregate and analyze the communications, such as for increasing the potential for providing a sale of a product, and the like. For instance, a customer may have a question related to a product, which may produce a dialog between the customer and the merchant (or automated processor-based agent representing the merchant), where the communications facility 129 analyzes the interaction and provides analysis to the merchant on how to improve the probability for a sale.

The e-commerce platform 100 may provide a financial facility 120 for secure financial transactions with customers, such as through a secure card server environment. The e-commerce platform 100 may store credit card information, such as in payment card industry data (PCI) environments (e.g., a card server), to reconcile financials, bill merchants, perform automated clearing house (ACH) transfers between an e-commerce platform 100 financial institution account and a merchant's back account (e.g., when using capital), and the like. These systems may have Sarbanes-Oxley Act (SOX) compliance and a high level of diligence required in their development and operation. The financial facility 120 may also provide merchants with financial support, such as through the lending of capital (e.g., lending funds, cash advances, and the like) and provision of insurance. In addition, the e-commerce platform 100 may provide for a set of marketing and partner services and control the relationship between the e-commerce platform 100 and partners. They also may connect and onboard new merchants with the e-commerce platform 100. These services may enable merchant growth by making it easier for merchants to work across the e-commerce platform 100. Through these services, merchants may be provided help facilities via the e-commerce platform 100.

In embodiments, online store 138 may support a great number of independently administered storefronts and process a large volume of transactional data on a daily basis for a variety of products. Transactional data may include customer contact information, billing information, shipping information, information on products purchased, information on services rendered, and any other information associated with business through the e-commerce platform 100. In embodiments, the e-commerce platform 100 may store this data in a data facility 134. The transactional data may be processed to produce analytics 132, which in turn may be provided to merchants or third-party commerce entities, such as providing consumer trends, marketing and sales insights, recommendations for improving sales, evaluation of customer behaviors, marketing and sales modeling, trends in fraud, and the like, related to online commerce, and provided through dashboard interfaces, through reports, and the like. The e-commerce platform 100 may store information about business and merchant transactions, and the data facility 134 may have many ways of enhancing, contributing, refining, and extracting data, where over time the collected data may enable improvements to aspects of the e-commerce platform 100.

Referring again to Fig. 1, in embodiments the e-commerce platform 100 may be configured with a commerce management engine 136 for content management, task automation and data management to enable support and services to the plurality of online stores 138 (e.g., related to products, inventory, customers, orders, collaboration, suppliers, reports, financials, risk and fraud, and the like), but be extensible through applications 142A-B that enable greater flexibility and custom processes required for accommodating an ever-growing variety of merchant online stores, POS devices, products, and services, where applications 142A may be provided internal to the e-commerce platform 100 or applications 142B from outside the e-commerce platform 100. In embodiments, an application 142A may be provided by the same party providing the platform 100 or by a different party. In embodiments, an application 142B may be provided by the same party providing the platform 100 or by a different party. The commerce management engine 136 may be configured for flexibility and scalability through portioning (e.g., sharding) of functions and data, such as by customer identifier, order identifier, online store identifier, and the like. The commerce management engine 136 may accommodate store-specific business logic and in some embodiments, may incorporate the administrator 114 and/or the online store 138.

The commerce management engine 136 includes base or "core" functions of the e-commerce platform 100, and as such, as described herein, not all functions supporting online stores 138 may be appropriate for inclusion. For instance, functions for inclusion into the commerce management engine 136 may need to exceed a core functionality threshold through which it may be determined that the function is core to a commerce experience (e.g., common to a majority of online store activity, such as across channels, administrator interfaces, merchant locations, industries, product types, and the like), is re-usable across online stores 138 (e.g., functions that can be re-used/modified across core functions), limited to the context of a single online store 138 at a time (e.g., implementing an online store 'isolation principle', where code should not be able to interact with multiple online stores 138 at a time, ensuring that online stores 138 cannot access each other's data), provide a transactional workload, and the like. Maintaining control of what functions are implemented may enable the commerce management engine 136 to remain responsive, as many required features are either served directly by the commerce management engine 136 or enabled through an interface 140A-B, such as by its extension through an application programming interface (API) connection to applications 142A-B and channels 110A-B, where interfaces 140A may be provided to applications 142A and/or channels 110A inside the e-commerce platform 100 or through interfaces 140B provided to applications 142B and/or channels 110B outside the e-commerce platform 100. Generally, the platform 100 may include interfaces 140A-B (which may be extensions, connectors, APIs, and the like) which facilitate connections to and communications with other platforms, systems, software, data sources, code and the like. Such interfaces 140A-B may be an interface 140A of the commerce management engine 136 or an interface 140B of the platform 100 more generally. If care is not given to restricting functionality in the commerce management engine 136, responsiveness could be compromised, such as through infrastructure degradation through slow databases or non-critical backend failures, through catastrophic infrastructure failure such as with a data center going offline, through new code being deployed that takes longer to execute than expected, and the like. To prevent or mitigate these situations, the commerce management engine 136 may be configured to maintain responsiveness, such as through configuration that utilizes timeouts, queues, back-pressure to prevent degradation, and the like.

Although isolating online store data is important to maintaining data privacy between online stores 138 and merchants, there may be reasons for collecting and using cross-store data, such as for example, with an order risk assessment system or a platform payment facility, both of which require information from multiple online stores 138 to perform well. In embodiments, rather than violating the isolation principle, it may be preferred to move these components out of the commerce management engine 136 and into their own infrastructure within the e-commerce platform 100.

In embodiments, the e-commerce platform 100 may provide for a platform payment facility 120, which is another example of a component that utilizes data from the commerce management engine 136 but may be located outside so as to not violate the isolation principle. The platform payment facility 120 may allow customers interacting with online stores 138 to have their payment information stored safely by the commerce management engine 136 such that they only have to enter it once. When a customer visits a different online store 138, even if they've never been there before, the platform payment facility 120 may recall their information to enable a more rapid and correct check out. This may provide a cross-platform network effect, where the e-commerce platform 100 becomes more useful to its merchants as more merchants join, such as because there are more customers who checkout more often because of the ease of use with respect to customer purchases. To maximize the effect of this network, payment information for a given customer may be retrievable from an online store's checkout, allowing information to be made available globally across online stores 138. It would be difficult and error prone for each online store 138 to be able to connect to any other online store 138 to retrieve the payment information stored there. As a result, the platform payment facility may be implemented external to the commerce management engine 136.

For those functions that are not included within the commerce management engine 136, applications 142A-B provide a way to add features to the e-commerce platform 100. Applications 142A-B may be able to access and modify data on a merchant's online store 138, perform tasks through the administrator 114, create new flows for a merchant through a user interface (e.g., that is surfaced through extensions / API), and the like. Merchants may be enabled to discover and install applications 142A-B through application search, recommendations, and support 128. In embodiments, core products, core extension points, applications, and the administrator 114 may be developed to work together. For instance, application extension points may be built inside the administrator 114 so that core features may be extended by way of applications, which may deliver functionality to a merchant through the extension.

In embodiments, applications 142A-B may deliver functionality to a merchant through the interface 140A-B, such as where an application 142A-B is able to surface transaction data to a merchant (e.g., App: "Engine, surface my app data in mobile and web admin using the embedded app SDK"), and/or where the commerce management engine 136 is able to ask the application to perform work on demand (Engine: "App, give me a local tax calculation for this checkout").

Applications 142A-B may support online stores 138 and channels 110A-B, provide for merchant support, integrate with other services, and the like. Where the commerce management engine 136 may provide the foundation of services to the online store 138, the applications 142A-B may provide a way for merchants to satisfy specific and sometimes unique needs. Different merchants will have different needs, and so may benefit from different applications 142A-B. Applications 142A-B may be better discovered through the e-commerce platform 100 through development of an application taxonomy (categories) that enable applications to be tagged according to a type of function it performs for a merchant; through application data services that support searching, ranking, and recommendation models; through application discovery interfaces such as an application store, home information cards, an application settings page; and the like.

Applications 142A-B may be connected to the commerce management engine 136 through an interface 140A-B, such as utilizing APIs to expose the functionality and data available through and within the commerce management engine 136 to the functionality of applications (e.g., through REST, GraphQL, and the like). For instance, the e-commerce platform 100 may provide API interfaces 140A-B to merchant and partner-facing products and services, such as including application extensions, process flow services, developer-facing resources, and the like. With customers more frequently using mobile devices for shopping, applications 142A-B related to mobile use may benefit from more extensive use of APIs to support the related growing commerce traffic. The flexibility offered through use of applications and APIs (e.g., as offered for application development) enable the e-commerce platform 100 to better accommodate new and unique needs of merchants (and internal developers through internal APIs) without requiring constant change to the commerce management engine 136, thus providing merchants what they need when they need it. For instance, shipping services 122 may be integrated with the commerce management engine 136 through a shipping or carrier service API, thus enabling the e-commerce platform 100 to provide shipping service functionality without directly impacting code running in the commerce management engine 136.

Many merchant problems may be solved by letting partners improve and extend merchant workflows through application development, such as problems associated with back-office operations (merchant-facing applications 142A-B) and in the online store 138 (customer-facing applications 142A-B). As a part of doing business, many merchants will use mobile and web related applications on a daily basis for back-office tasks (e.g., merchandising, inventory, discounts, fulfillment, and the like) and online store tasks (e.g., applications related to their online shop, for flash-sales, new product offerings, and the like), where applications 142A-B, through extension / API 140A-B, help make products easy to view and purchase in a fast growing marketplace. In embodiments, partners, application developers, internal applications facilities, and the like, may be provided with a software development kit (SDK), such as through creating a frame within the administrator 114 that sandboxes an application interface. In embodiments, the administrator 114 may not have control over nor be aware of what happens within the frame. The SDK may be used in conjunction with a user interface kit to produce interfaces that mimic the look and feel of the e-commerce platform 100, such as acting as an extension of the commerce management engine 136.

Applications 142A-B that utilize APIs may pull data on demand, but often they also need to have data pushed when updates occur. Update events may be implemented in a subscription model, such as for example, customer creation, product changes, or order cancelation. Update events may provide merchants with needed updates with respect to a changed state of the commerce management engine 136, such as for synchronizing a local database, notifying an external integration partner, and the like. Update events may enable this functionality without having to poll the commerce management engine 136 all the time to check for updates, such as through an update event subscription. In embodiments, when a change related to an update event subscription occurs, the commerce management engine 136 may post a request, such as to a predefined callback URL. The body of this request may contain a new state of the object and a description of the action or event. Update event subscriptions may be created manually, in the administrator facility 114, or automatically (e.g., via the API 140A-B). In embodiments, update events may be queued and processed asynchronously from a state change that triggered them, which may produce an update event notification that is not distributed in real-time.

In embodiments, the e-commerce platform 100 may provide application search, recommendation and support 128. Application search, recommendation and support 128 may include developer products and tools to aid in the development of applications, an application dashboard (e.g., to provide developers with a development interface, to administrators for management of applications, to merchants for customization of applications, and the like), facilities for installing and providing permissions with respect to providing access to an application 142A-B (e.g., for public access, such as where criteria must be met before being installed, or for private use by a merchant), application searching to make it easy for a merchant to search for applications 142A-B that satisfy a need for their online store 138, application recommendations to provide merchants with suggestions on how they can improve the user experience through their online store 138, a description of core application capabilities within the commerce management engine 136, and the like. These support facilities may be utilized by application development performed by any entity, including the merchant developing their own application 142A-B, a third-party developer developing an application 142A-B (e.g., contracted by a merchant, developed on their own to offer to the public, contracted for use in association with the e-commerce platform 100, and the like), or an application 142A or 142B being developed by internal personal resources associated with the e-commerce platform 100. In embodiments, applications 142A-B may be assigned an application identifier (ID), such as for linking to an application (e.g., through an API), searching for an application, making application recommendations, and the like.

The commerce management engine 136 may include base functions of the e-commerce platform 100 and expose these functions through APIs 140A-B to applications 142A-B. The APIs 140A-B may enable different types of applications built through application development. Applications 142A-B may be capable of satisfying a great variety of needs for merchants but may be grouped roughly into three categories: customer-facing applications, merchant-facing applications, integration applications, and the like. Customer-facing applications 142A-B may include online store 138 or channels 110A-B that are places where merchants can list products and have them purchased (e.g., the online store, applications for flash sales (e.g., merchant products or from opportunistic sales opportunities from third-party sources), a mobile store application, a social media channel, an application for providing wholesale purchasing, and the like). Merchant-facing applications 142A-B may include applications that allow the merchant to administer their online store 138 (e.g., through applications related to the web or website or to mobile devices), run their business (e.g., through applications related to POS devices), to grow their business (e.g., through applications related to shipping (e.g., drop shipping), use of automated agents, use of process flow development and improvements), and the like. Integration applications may include applications that provide useful integrations that participate in the running of a business, such as shipping providers 112 and payment gateways.

In embodiments, an application developer may use an application proxy to fetch data from an outside location and display it on the page of an online store 138. Content on these proxy pages may be dynamic, capable of being updated, and the like. Application proxies may be useful for displaying image galleries, statistics, custom forms, and other kinds of dynamic content. The core-application structure of the e-commerce platform 100 may allow for an increasing number of merchant experiences to be built in applications 142A-B so that the commerce management engine 136 can remain focused on the more commonly utilized business logic of commerce.

The e-commerce platform 100 provides an online shopping experience through a curated system architecture that enables merchants to connect with customers in a flexible and transparent manner. A typical customer experience may be better understood through an embodiment example purchase workflow, where the customer browses the merchant's products on a channel 110A-B, adds what they intend to buy to their cart, proceeds to checkout, and pays for the content of their cart resulting in the creation of an order for the merchant. The merchant may then review and fulfill (or cancel) the order. The product is then delivered to the customer. If the customer is not satisfied, they might return the products to the merchant.

In an example embodiment, a customer may browse a merchant's products on a channel 110A-B. A channel 110A-B is a place where customers can view and buy products. In embodiments, channels 110A-B may be modeled as applications 142A-B (a possible exception being the online store 138, which is integrated within the commence management engine 136). A merchandising component may allow merchants to describe what they want to sell and where they sell it. The association between a product and a channel may be modeled as a product publication and accessed by channel applications, such as via a product listing API. A product may have many options, like size and color, and many variants that expand the available options into specific combinations of all the options, like the variant that is extra-small and green, or the variant that is size large and blue. Products may have at least one variant (e.g., a "default variant" is created for a product without any options). To facilitate browsing and management, products may be grouped into collections, provided product identifiers (e.g., stock keeping unit (SKU)) and the like. Collections of products may be built by either manually categorizing products into one (e.g., a custom collection), by building rulesets for automatic classification (e.g., a smart collection), and the like. Products may be viewed as 2D images, 3D images, rotating view images, through a virtual or augmented reality interface, and the like.

In embodiments, the customer may add what they intend to buy to their cart (in an alternate embodiment, a product may be purchased directly, such as through a buy button as described herein). Customers may add product variants to their shopping cart. The shopping cart model may be channel specific. The online store 138 cart may be composed of multiple cart line items, where each cart line item tracks the quantity for a product variant. Merchants may use cart scripts to offer special promotions to customers based on the content of their cart. Since adding a product to a cart does not imply any commitment from the customer or the merchant, and the expected lifespan of a cart may be in the order of minutes (not days), carts may be persisted to an ephemeral data store.

The customer then proceeds to checkout. A checkout component may implement a web checkout as a customer-facing order creation process. A checkout API may be provided as a computer-facing order creation process used by some channel applications to create orders on behalf of customers (e.g., for point of sale). Checkouts may be created from a cart and record a customer's information such as email address, billing, and shipping details. On checkout, the merchant commits to pricing. If the customer inputs their contact information but does not proceed to payment, the e-commerce platform 100 may provide an opportunity to re-engage the customer (e.g., in an abandoned checkout feature). For those reasons, checkouts can have much longer lifespans than carts (hours or even days) and are therefore persisted. Checkouts may calculate taxes and shipping costs based on the customer's shipping address. Checkout may delegate the calculation of taxes to a tax component and the calculation of shipping costs to a delivery component. A pricing component may enable merchants to create discount codes (e.g., 'secret' strings that when entered on the checkout apply new prices to the items in the checkout). Discounts may be used by merchants to attract customers and assess the performance of marketing campaigns. Discounts and other custom price systems may be implemented on top of the same platform piece, such as through price rules (e.g., a set of prerequisites that when met imply a set of entitlements). For instance, prerequisites may be items such as "the order subtotal is greater than $100" or "the shipping cost is under $10", and entitlements may be items such as "a 20% discount on the whole order" or "$10 off products X, Y, and Z".

Customers then pay for the content of their cart resulting in the creation of an order for the merchant. Channels 110A-B may use the commerce management engine 136 to move money, currency or a store of value (such as dollars or a cryptocurrency) to and from customers and merchants. Communication with the various payment providers (e.g., online payment systems, mobile payment systems, digital wallet, credit card gateways, and the like) may be implemented within a payment processing component. The actual interactions with the payment gateways 106 may be provided through a card server environment. In embodiments, the payment gateway 106 may accept international payment, such as integrating with leading international credit card processors. The card server environment may include a card server application, card sink, hosted fields, and the like. This environment may act as the secure gatekeeper of the sensitive credit card information. In embodiments, most of the process may be orchestrated by a payment processing job. The commerce management engine 136 may support many other payment methods, such as through an offsite payment gateway 106 (e.g., where the customer is redirected to another website), manually (e.g., cash), online payment methods (e.g., online payment systems, mobile payment systems, digital wallet, credit card gateways, and the like), gift cards, and the like. At the end of the checkout process, an order is created. An order is a contract of sale between the merchant and the customer where the merchant agrees to provide the goods and services listed on the orders (e.g., order line items, shipping line items, and the like) and the customer agrees to provide payment (including taxes). This process may be modeled in a sales component. Channels 110A-B that do not rely on commerce management engine 136 checkouts may use an order API to create orders. Once an order is created, an order confirmation notification may be sent to the customer and an order placed notification sent to the merchant via a notification component. Inventory may be reserved when a payment processing job starts to avoid over-selling (e.g., merchants may control this behavior from the inventory policy of each variant). Inventory reservation may have a short time span (minutes) and may need to be very fast and scalable to support flash sales (e.g., a discount or promotion offered for a short time, such as targeting impulse buying). The reservation is released if the payment fails. When the payment succeeds, and an order is created, the reservation is converted into a long-term inventory commitment allocated to a specific location. An inventory component may record where variants are stocked, and tracks quantities for variants that have inventory tracking enabled. It may decouple product variants (a customer facing concept representing the template of a product listing) from inventory items (a merchant facing concept that represent an item whose quantity and location is managed). An inventory level component may keep track of quantities that are available for sale, committed to an order or incoming from an inventory transfer component (e.g., from a vendor).

The merchant may then review and fulfill (or cancel) the order. A review component may implement a business process merchant's use to ensure orders are suitable for fulfillment before actually fulfilling them. Orders may be fraudulent, require verification (e.g., ID checking), have a payment method which requires the merchant to wait to make sure they will receive their funds, and the like. Risks and recommendations may be persisted in an order risk model. Order risks may be generated from a fraud detection tool, submitted by a third-party through an order risk API, and the like. Before proceeding to fulfillment, the merchant may need to capture the payment information (e.g., credit card information) or wait to receive it (e.g., via a bank transfer, check, and the like) and mark the order as paid. The merchant may now prepare the products for delivery. In embodiments, this business process may be implemented by a fulfillment component. The fulfillment component may group the line items of the order into a logical fulfillment unit of work based on an inventory location and fulfillment service. The merchant may review, adjust the unit of work, and trigger the relevant fulfillment services, such as through a manual fulfillment service (e.g., at merchant managed locations) used when the merchant picks and packs the products in a box, purchase a shipping label and input its tracking number, or just mark the item as fulfilled. A custom fulfillment service may send an email (e.g., a location that doesn't provide an API connection). An API fulfillment service may trigger a third party, where the third-party application creates a fulfillment record. A legacy fulfillment service may trigger a custom API call from the commerce management engine 136 to a third party (e.g., fulfillment by Amazon). A gift card fulfillment service may provision (e.g., generating a number) and activate a gift card. Merchants may use an order printer application to print packing slips. The fulfillment process may be executed when the items are packed in the box and ready for shipping, shipped, tracked, delivered, verified as received by the customer, and the like.

If the customer is not satisfied, they may be able to return the product(s) to the merchant. The business process merchants may go through to "un-sell" an item may be implemented by a return component. Returns may consist of a variety of different actions, such as a restock, where the product that was sold actually comes back into the business and is sellable again; a refund, where the money that was collected from the customer is partially or fully returned; an accounting adjustment noting how much money was refunded (e.g., including if there was any restocking fees, or goods that weren't returned and remain in the customer's hands); and the like. A return may represent a change to the contract of sale (e.g., the order), and where the e-commerce platform 100 may make the merchant aware of compliance issues with respect to legal obligations (e.g., with respect to taxes). In embodiments, the e-commerce platform 100 may enable merchants to keep track of changes to the contract of sales over time, such as implemented through a sales model component (e.g., an append-only date-based ledger that records sale-related events that happened to an item).

As various aspects of the e-commerce platform 100 have been discussed, the disclosure will now focus on a brief review of prior art approaches, followed by a more detailed discussion of embodiments of methods and systems for determination of fulfillment options, followed by examples of processing prospective orders under embodiments.

In embodiments, a prospective order may be any potential transaction that has not yet been completed and may be a prospective purchase or a prospective transaction of one or more products. A prospective order may include, but not be limited to, a product existing: (i) in an online store 138 shopping cart (such as on a customer device 150 or merchant device 102), (ii) at a physical retail storefront (such as on a POS device 152), (iii) in an advertisement, lead or any channel, or (iv) at or in any other retail, online, sales or transaction location, channel or medium where a transaction could commence; (v) in connection with a prospective customer browsing or viewing a product (such as on a product page) or a customer viewing an advertisement, (vi) in connection with a customer's historical purchases or browsing activity, (vii) in connection with social media communications, or (vii) in connection with other non-traditional transaction opportunities.

In embodiments, an inventory location is typically but not limited to a vendor, seller, or source that may have or make available or make or manufacture, inventory of a product. An inventory location may be an actual brick and mortar location (e.g. a retail store or warehouse), it may be operated or controlled by a merchant or may be a third party to a merchant such as a third party logistics or product provider, or it may be a logical source from which the product can be obtained (e.g. another online source) with the capability of the product being shipped to a destination. In embodiments, an inventory location may be capable of making or manufacturing a product (such as shoes, computers and cabinetry), optionally with product components and labor on site, or alternatively also have an internal or external source for a product (e.g. outsourcing, drop shipment, and the like) and the inventory assessment for such location may consider the products that can be made or manufactured (such as by considering available components, parts and labor) and not only the products present at the location.

In embodiments, inventory information may include, without limitation, availability, quantity and condition (e.g. new, refurbished, used (possibly with descriptions of like new, fair and poor condition) and the like) of product(s) at one or more inventory locations. Inventory information may be obtained internal or external to an e-commerce platform 100, and may be acquired by database lookups, application programming interface (API) calls, or other computing operations. Inventory information may consider products which may be created, manufactured or otherwise sourced for prospective or completed transactions, either in real time or under just-in-time practices or other timeframes, for a particular application or product.

In embodiments, a shipping provider may be a shipping carrier (e.g. UPS, FedEx, shipping capabilities of the platform 100 or the like) that provides shipping services, but it may also be any party capable of transporting, delivering or rendering a product to a designated destination.

In embodiments, shipping information may include, without limitation, available shipping providers, shipping services available (e.g. one-day, two-day, air, ground, and the like). It may also include weight, dimensions, dimensional weight, oversize considerations, handling times, shipping times, shipping costs, restrictions, handling instructions, insurance, proof of delivery/acceptance considerations, customs considerations, Harmonized Commodity Description and Coding System or HTS considerations, tax considerations, origin and destination considerations and other information related to fulfillment, transport, rendering or delivery of a product to a destination. Shipping information may also include information on download (such as for a digital or electronic product), freight, pickup, installation or custom or other arrangements for fulfillment or delivery of a product. Shipping information may be obtained internal or external to an e-commerce platform 100, and may be acquired by database lookups, API calls, or other computing operations.

In embodiments, an API may be an application programming interface under the convention definition known in the art, or any software, platform or communication means that may allow two computing devices or systems to exchange information, such as inventory information or shipping information. For example, a shipping provider may have an API to allow its customers and other parties to retrieve shipping rates and other information relating to its product and service offerings. An e-commerce platform 100 therefore may request information from the shipping provider for a given prospective shipment via the shipping provider's API, and such a request from the e-commerce platform 100 to the shipping provider may be an API call. In such an example, when the shipping provider responds to the e-commerce platform 100 API call that was made, then the reply may be an API response. Similarly, inventory locations may have an API for proving inventory information such as availability and condition of products.

In embodiments, a fulfillment option typically, without limitation, may contain inventory information, shipping information and other information as necessary to describe delivering or providing a product to a destination or customer. Fulfillment options may be a set of shipping rates, ranging from no shipping rate, to a single shipping rate, to a plurality of shipping rates. Fulfillment options may also include digital download, license transfer, freight, pickup in a store or given location or local delivery, as well as any other fulfillment option for a product. One or more recommended fulfillment options or recommended options may be derived from a determination of a priority basis against available fulfillment options. If there are no shipping rates in a set of fulfillment options, then the recommended option may be deemed to be no available fulfillment option.

In embodiments, a priority basis may determine one or more recommended fulfillment options based upon various factors such as: lowest shipping cost, fastest delivery time, shortest geographic distance (e.g. between the inventory origin and destination), considerations related to a user, user specified preferences, considerations related to a customer, customer specified preferences, considerations related to a merchant, merchant specified preferences, information regarding additional parties to the transaction and related preferences, fulfillment costs (such as including labor costs at an inventory location), e-commerce platform 100 considerations (e.g. internal shipping or lowest processing cost, handling considerations and the like), or other fulfillment considerations.

In embodiments, a delivery profile may include information about a product, such as inventory locations where inventory may be located (e.g. China, Japan, Paris, and the like), availability of the product (e.g. number in stock), condition (e.g. new, refurbished, used, and the like) of the inventory, geographic delivery zones (e.g. United States, France, South Africa, a subset of a country, a region and the like) to deliver the product, shipping providers (e.g. UPS, FedEx, and the like), that may deliver product to locations in the delivery zones, shipping services (e.g. overnight, two-day, air, ground, and the like) made available by the respective shipping providers, shipping rates for those services (possibly considering the specifics of a given product to be shipped), and related product, weight, dimensions, dimensional weight, inventory, shipping, cross-border, customs, tariff or tax-related information (e.g. HTS code), or other information. A delivery profile may be stored in a delivery profile record in a delivery profile database in an e-commerce platform 100, although delivery profiles may also be available in other forms, structures, databases or via a network communication and the like.

In embodiments, when a prospective order is present, several steps may be accomplished before the e-commerce platform 100 renders fulfillment options. Available inventory of the product may be confirmed to meet the allotment (e.g. quantity) of the prospective order. Available shipping services, times and rates may be confirmed to ensure the product may be timely delivered to the destination. If such fulfillment options can be presented to the customer in a responsive, clear manner, the customer experience is improved, thereby resulting in higher customer satisfaction, increased conversion of prospective orders to completed transactions, and ultimately increased market share and revenues of the e-commerce platform 100.

Traditionally, before a prior art online retailer provides available inventory and estimated shipping costs for items in a shopping cart, the online retailer iterates through numerous vendors/suppliers to: (1) identify one or more vendors of the product(s), (2) confirm available inventory, (3) identify one or more shipping providers that can deliver the products from the vendor(s) to the destination, and (4) determine the various shipping times and corresponding shipping costs.

These first steps of identifying a source of available inventory are typically performed by checking vendors iteratively through the vendor-centric database to determine where sufficient inventory of the product is available. By way of example, this is a serial process where the database lookup, communication or API call is made one after another until the vendor list has been exhausted.

Similarly, the subsequent steps of identifying shipping providers and checking options and rates is also performed iteratively based on the identified vendors having available inventory. Obtaining shipping options, similar to identifying available inventory, is typically performed a serial process where the requests for information or API calls are made one after another until the list of possibilities is exhausted.

Thus, the prior art in many online shopping experiences evidences slow reaction times to populating fulfillment details (e.g. shipping times and costs), given the iterative processes that must occur before such information is communicated to the customer. This time lapse can cause loss of a transaction, or worse possible loss of a customer. The unresponsive experience can become even more compounded when multiple products are selected, when such products are of different categories (e.g. standard, perishable, fragile, airline prohibited, and the like), or when such products originate from different regions or countries.

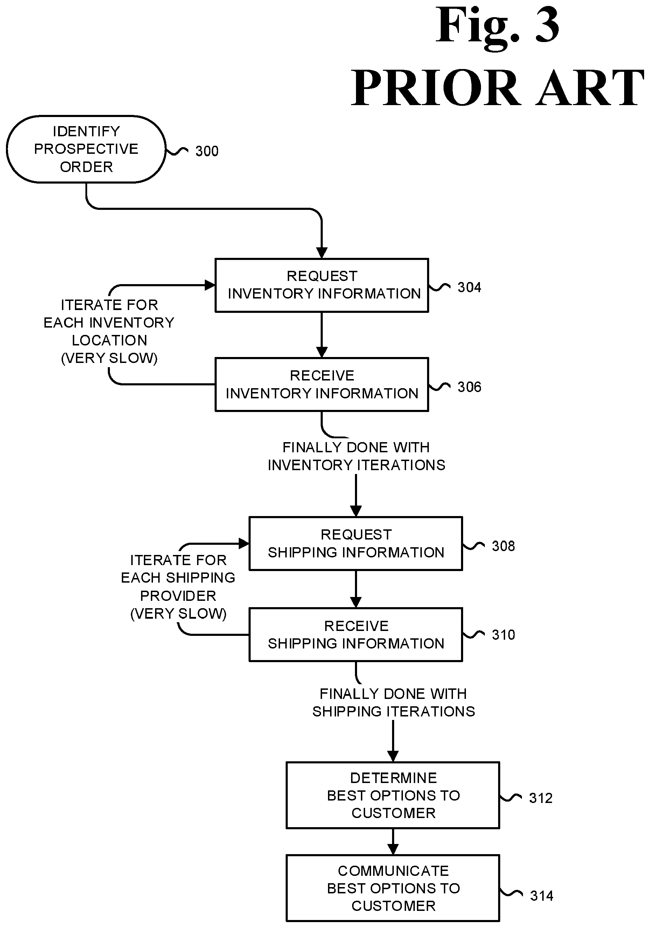

With reference to Fig. 3, a prior art approach for determination of fulfillment details of a prospective order is shown. More particularly, the process begins with identifying a prospective order in step 300.

In steps 304 and 306, a traditional website engine iteratively requests and receives inventory details relating to available inventory, respectively. As noted, this process can take a significant amount of time with hundreds or thousands of iterations or cycles. Once the traditional online retail engine is finally done with inventory iterations, the website engine moves to the next steps.

Similarly, in steps 308 and 310, the traditional website engine iteratively requests and receives shipping details regarding possible shipping arrangements, respectively, for the identified inventory details. Since shipping information can and does frequently change, it remains important for an online retailer to have accurate shipping information to determine fulfillment details for a prospective order. Once again, in such prior art solutions, the process is slow and inefficient as the online retail engine iteratively checks (via requesting and receiving) shipping details in a serial, sequential approach.

Online retail engines may request and receive such shipping details via API calls. Unfortunately, too many API calls to a shipping provider can become costly, since a shipping provider may charge per API call, or contractually or technically may provide only a limited number of API calls and either charge or prohibit additional API calls. Excessive API calls are also time consuming and expend computing resources. As can be recognized, minimizing API calls to a shipping provider is a desirable goal. In addition, in competitive online markets transactions and customers can be easily lost due to an unresponsive or untimely checkout process that does not promptly provide fulfillment options with corresponding costs.

Once the iterative steps 304, 306, 308 and 310 are completed, then online retail websites typically determine and communicate the options to the customer in steps 312 and 314, respectively.

One of the fundamental problems with prior art approaches is that traditional online retailing engines and databases are structured around vendors rather than products. As such, retrieving information about products sold by multiple vendors or housed in multiple locations, whether in a database, an information system or across a network or the like, becomes a complicated and iterative endeavor searching across many vendors, as described above.

These prior art approaches can become further complicated when multiple products are included, when multiple locations are required to fulfill a quantity of product or products, or when international transactions introduce customs, international fees, restrictions and other concerns that should be taken into consideration. In sum, prior art vendor-centric databases are not well equipped to determine fulfillment options for a product in a fast or efficient way, particularly when available in multiple inventory locations.

Substantial improvements and efficiencies can be realized through a product-centric delivery profile data structure and database, such as those disclosed herein. At a top level, rather than iterate and parse through a vendor-centric approach as evidenced in prior art approaches, embodiments disclosed herein utilize a product-centric delivery profile which may be stored in a delivery profile database to retrieve information about a product and its fulfillment options.

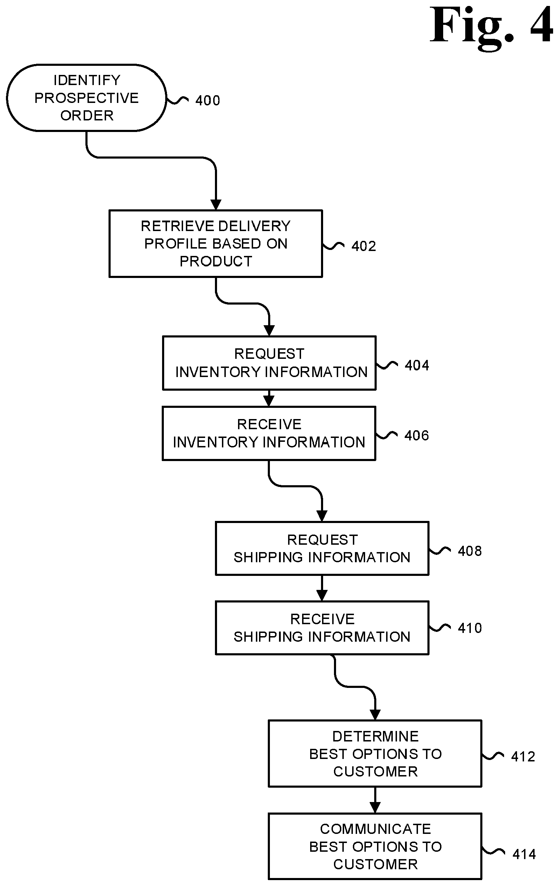

Fig. 4 illustrates an embodiment of determining fulfillment options utilizing delivery profiles. The process begins with identifying a prospective order in step 400. The prospective order may identify one or more products and a destination for the one or more products. Alternatively, the prospective order may identify differing destinations for a plurality of products.

Step 402 may retrieve a delivery profile from a delivery profile record in a delivery profile database. The delivery profile is product-centric and specific to the product, and may provide preliminary information about inventory locations, delivery zones, shipping services and shipping rates. In some cases, such preliminary information may be sufficient for purposes of determining fulfillment options.

In other cases, such preliminary information may optimize and expedite steps 404 and 406 as compared to the prior art iterative steps 304 and 306. Rather than iteratively step through the vendor database or vendor network vendor-by-vendor searching for available inventory of the product as illustrated in the prior art, embodiments benefit from preliminary information to optimize determination of requests for inventory information or requests for shipping information. Thus, steps 404 and 406 typically need only request inventory information regarding inventory locations found in the delivery profile, resulting in only a fraction of the time and resources expended as compared to the prior art vendor-by-vendor iterative approaches.

In embodiments, to further optimize steps 404 and 406, an inventory information request may be preferably initiated, executed or made as soon as the need is determined that an inventory information request becomes necessary or useful. As such, a plurality of inventory information requests may be made as soon as possible, or without delay, or in parallel rather than a serial sequential order, depending upon when the determination is made as to the necessity or utility of such an inventory information request. By way of example, if a product is initially expected (e.g. via the information in the delivery profile) to be available at four inventory locations in the e-commerce platform 100, step 404 of requesting inventory information can be immediately executed for all four inventory information requests (and not other irrelevant requests). Inventory information requests may be made to inventory locations both internal and external to the e-commerce platform 100.

In step 406, in response to step 404, the corresponding inventory information may be received from inventory locations in the course of a single iteration/cycle, rather than the prior art example of hundreds, thousands or more iterations/cycles.

Steps 408 and 410 can be similarly optimized and expedited via preliminary information provided by the delivery profile, as well as the inventory information received from step 406, if so requested and received. For example, in embodiments, if inventory information received from step 406 indicates that inventory of a product is not available from one or more inventory locations in the delivery profile, then such inventory locations may be omitted or disregarded from further processing or consideration. More particularly, no shipping information requests need be initiated for inventory locations that are determined not to have available inventory based on an inventory information response.

Similar to inventory information requests, in embodiments, to further optimize steps 408 and 410, a shipping information request may be preferably initiated, executed or made as soon as the need is determined that a shipping information request becomes necessary or useful. A prospective order may have an actual destination address (e.g. a customer is logged in and the address is specified, or the destination address is otherwise known), or a prospective order may have a predicted or inferred destination address. For example, if the actual destination address is not known it may be necessary to predict a destination address based on historical purchases or a location of activity regarding a prospective order (e.g. an IP address of a customer device 150 with a shopping cart checkout screen, or GPS information provided by a customer device 150, or the like). If there are multiple predicted destination addresses, shipping information requests may be made to all or a selection of the multiple predicted destination addresses.

As such, a plurality of shipping information requests may be made as soon as possible, or without delay, or in parallel rather than a serial sequential order, depending upon when the determination is made as to the necessity or utility of such a shipping information request. By way of example, if fulfillment options are initially expected (e.g. via the information in the delivery profile) to be available from three shipping providers, step 408 of requesting shipping information can be immediately executed for all three shipping information requests (and not other irrelevant requests). In step 410, in response to step 408, the corresponding shipping information may be received from the shipping providers in the course of a single iteration/cycle, rather than the prior art example of numerous iterations/cycles.

In step 412, provided that at least one fulfillment option exists, a determination may be made based on a priority basis (e.g. lowest shipping cost) to determine the recommended option or recommended options for fulfillment based on available fulfillment options. As noted, the recommended options may be either a single recommended option or a plurality of recommended options. In other situations, where no available fulfillment options or shipping rates are available to the delivery zone corresponding to the destination, then no recommended options are available.

In step 414, the recommended options determined in step 412 may be communicated to the customer. The communication to the customer may be via a customer device 150 (e.g. on the screen of a web page (such as on a product page, possibly in connection with a payment button, or in connection with a shopping cart), on a smartphone, via a text message or email, or virtually any communication means between the e-commerce platform 100 and the customer). In embodiments, the communication in step 414 may be communicated as a completed transaction to the customer device 150, wherein the prospective order is converted to a completed transaction.

In embodiments, as the product is updated (e.g. a new product is placed in the shopping cart) or as new, late or updated information (e.g. late API response from an API call) is received, steps 412 and 414 may be revisited to repeat the determination of recommended options and communication of recommended options to the customer.

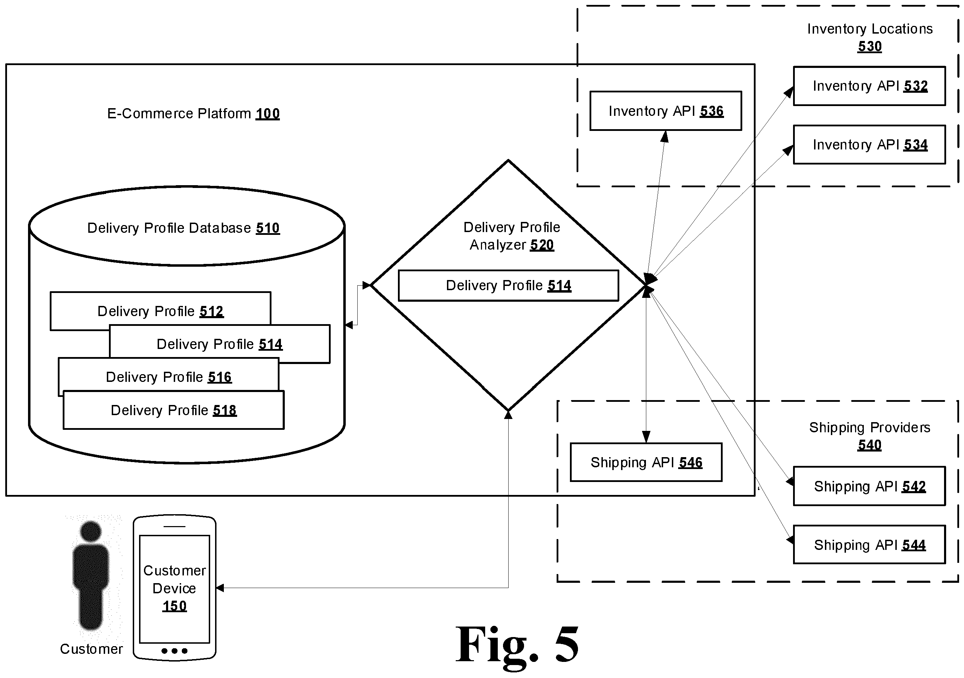

Referring to Fig. 5, a logical diagram illustrates an embodiment architecture for determining fulfillment options utilizing delivery profiles. A delivery profile database 510 and a delivery profile analyzer 520 may be implemented internal to the e-commerce platform 100 as illustrated. Alternatively, the delivery profile database 510 or the delivery profile analyzer 520 may be situated or configured external to the e-commerce platform 100.

In embodiments, inventory locations 530 may be internal or external to the e-commerce platform 100, as illustrated by the alternate placements of inventory API calls on the figure inside and outside the e-commerce platform 100. By way of example, without limitation, inventory locations to source inventory for a prospective order could be internal or external to the e-commerce platform 100, including retail locations, warehouses, manufacturing locations (e.g. just-in-time or on-demand manufacturing), other physical product locations or other logical product sources (e.g. outsourcing, drop shipment, and the like). More particularly, inventory locations 530 is shown with inventory API 532 and inventory API 534 outside the e-commerce platform 100, while inventory API 536 is illustrated inside the e-commerce platform 100.

In embodiments, shipping providers 540 may also be internal or external to the e-commerce platform 100, as illustrated by the alternate placements of API calls on the figure inside and outside the e-commerce platform 100. More particularly, shipping providers 530 is shown with shipping API 542 and shipping API 544 outside the e-commerce platform 100, while shipping API 546 is illustrated inside the e-commerce platform 100.

In embodiments, the delivery profile database 510 may include a plurality of delivery profiles records such as delivery profile 512, delivery profile 514, delivery profile 516 and delivery profile 518. By way of example, each of these delivery profiles may correspond to a specific product available for purchase on the e-commerce platform 100.

When fulfillment options of a product are to be determined by the e-commerce platform 100 (e.g. to determine inventory available and shipping options), the corresponding delivery profile may be retrieved from the delivery profile database 510. In the example illustrated by the present figure, delivery profile 514 is retrieved and analyzed by the delivery profile analyzer 520.

In embodiments, the delivery profile analyzer 520 performs step 402 retrieving the delivery profile 514 from the delivery profile database 510. The delivery profile 514 may contain pertinent information centric to the product to determine fulfillment options, such as preliminary inventory locations, delivery zones, shipping services, shipping rates, and other information required to procure fulfillment options for the prospective order.

In embodiments, the delivery profile analyzer 520 may be incorporated into the e-commerce platform 100 (as illustrated) or be external to the e-commerce platform. The delivery profile analyzer 520 may be incorporated into existing hardware or software or may comprise dedicated hardware or software to perform all or a subset of the steps and actions describe herein. The delivery profile analyzer 520 may be responsible for API calls (e.g. shipping information requests to shipping providers) or delegate that task to other software or hardware either located internal or external to the e-commerce platform 100. The deliver profile analyzer 520 may be configured to use specific algorithms or formulas to determine the recommended options from the fulfillment options; or, it may alternatively be configured to learn and implement a priority basis using data, such as through machine learning techniques.

Following the retrieval step 402, in embodiments the delivery analyzer 520 utilizes information from the delivery profile 514 to request inventory information from specified inventory locations 530, noted as step 404. These inventory information requests are illustrated as inventory API 532, inventory API 534 and inventory API 536. In response to the inventory API 532-536 requests, inventory information responses may be received by the delivery profile analyzer 520, as illustrated by the double-pointed arrows (back to the requestor).

Once the delivery profile analyzer 520 has confirmed availability of the product via the inventory API 532-536, it may omit or disregard for further processing inventory locations where no inventory is available. The delivery profile analyzer 520 thereafter may utilize the inventory information to determine shipping information requests to be requested.

These shipping information requests are illustrated as shipping API 542, shipping API 544 and shipping API 546. In response to the shipping API 542-546 requests, shipping information responses may be received by the delivery profile analyzer 520, as illustrated by the double-pointed arrows (back to the requestor).

In embodiments, a prospective order may have multiple shipments originating from multiple inventory sources, thereby requiring consideration of multiple combinations of fulfillment options. For example, a prospective order: (i) may have multiple products (and therefore may have multiple delivery profiles) or (ii) may have multiple quantity of the same product, but from different inventory origins (e.g. different color/sub-product units sourced from different inventory locations, insufficient stock at any one location, and the like). In these occasions, the delivery profile analyzer 520 may create different combinations of shipping rates to create fulfillment options since multiple shipments are necessary for the prospective order.

For example, a hypothetical prospective order may be for a first product A and a second product B, with both products shipped from different inventory locations. Product A may have several shipping rates available (e.g. overnight service at $30 and ground service at $10) and Product B may have several shipping rates available (e.g. priority service at $12 and ground service at $5). From a computing standpoint, many different combinations are possible and may be created as fulfillment options, whether or not these fulfillment options are ultimately communicated to the customer. For example, combinations may be created from fastest delivery possible (e.g. overnight and priority services), to similar named/designated services (e.g. ground services and the like), to lowest cost services, or based on other factors may serve as a way of creating combinations of fulfillment options. In the example above, possible combinations of shipping rates may be: (i) fastest delivery time by shipping Product A via overnight service and Product B by priority service for a total shipping cost of $42, (ii) lowest cost (or similar named service) by shipping Product A and Product B via ground service for a total shipping cost of $15, (iii) mixed rates/services by shipping Product A via overnight service but shipping Product B via ground service at $5 for cost savings for a total of $35, or (iv) mixed rates/services by shipping Product A by ground service and Product B by priority service for a total of $22.

On occasions where multiple shipping rates may be combined to create fulfillment options for a prospective order, these multiple fulfillment options may be reduced to one or more recommended options for communication to a customer (e.g. via a customer device) by using a priority basis.

In embodiments, Step 412 may be performed by the delivery profile analyzer 520, wherein a priority basis is used to determine a recommended option (or a plurality of recommended options). Where no shipping rates exist in the fulfillment options, a recommended option of no available fulfillment options may be determined. The priority basis may be configured for a variety of different algorithms or factors such as lowest shipping cost, fastest delivery time, lowest order filling cost, user specified preferences or shortest geographical distance, or the delivery profile analyzer 520 may be configured to learn based on historical data provided.

Step 414 may also be performed by delivery profile analyzer 520, wherein the recommended option or (or recommended options) may be provided to a customer device 150 or other communication directed to the customer.

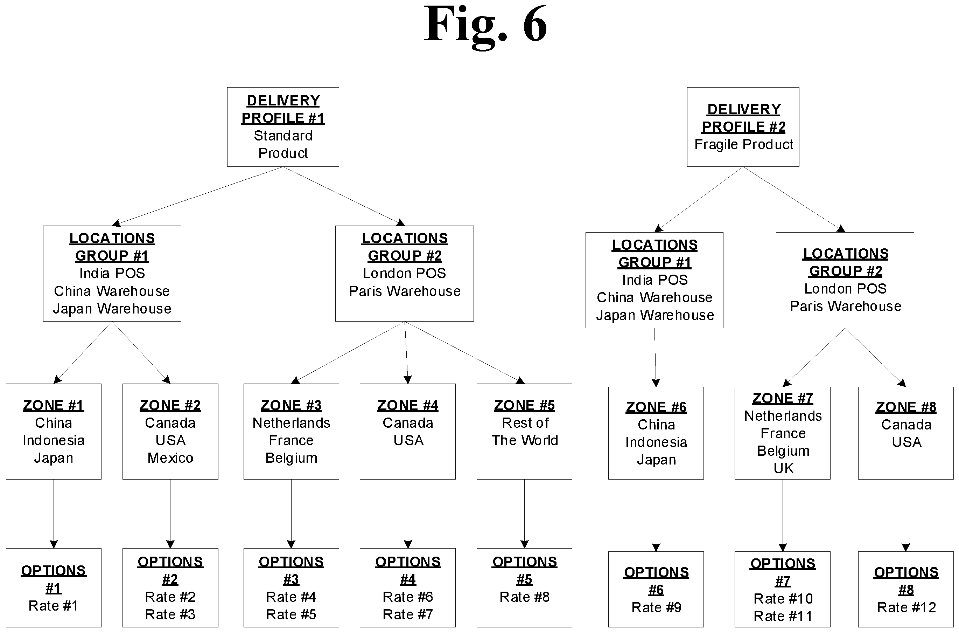

Turning to Fig. 6, a delivery profile Profile #1 for a standard product and a delivery profile Profile #2 for a fragile product are illustrated, with each delivery profile having inventory locations Location Group #1 and Location Group #2, respectively. Location Group #1 and Location Group #2 for each respective delivery profile reflect on a preliminary basis that inventory may be available at these locations for the corresponding product.

For each delivery profile Profile #1 and Profile #2, their respective inventory locations Location Group #1 and Location Group #2 also have various delivery zones illustrated as Zone #1, Zone #2, Zone #3, Zone #4, Zone #5, Zone #6, Zone #7 and Zone #8. Zones #1 - #8 designate where the corresponding product can be delivered pursuant to the corresponding inventory location(s) under the delivery profile. For illustration purposes, countries have been listed inside various delivery zones, but any form of geographic, shopping, time, demographic, logical, transactional or other designation may be implemented as a delivery zone, including but not limited to portions of a country, states, cities or other geographic designations, including geographic designations having exceptions (e.g. China but not Hong Kong). Therefore, by way of example, although Zone #1 designates China, Indonesia and Japan as illustrated, in alternate hypothetical embodiments such a delivery zone could reflect Southern China excluding Hong Kong, including Indonesia and Japan. Or, alternatively, such zones could be non-geographic in nature relating to membership in a shopping program (e.g. a premier subscription or rewards program), time of the year (e.g. non-holiday season, every tuesday, or the like), demographic (e.g. military discount), or other non-geographic designations.

Further, each delivery zone of Zones #1 - #8 also have corresponding fulfillment options illustrated as Options #1, Options #2, Options #3, Options #4, Options #5, Options #6, Options #7 and Options #8. As illustrated, each set of Options #1 - #8 may have multiple shipping rates, wherein each shipping rate may represent a shipping provider (e.g. UPS, FedEx, and the like), a shipping service (e.g. overnight, two-day, air, ground, and the like), a shipping time and a shipping rate.

The data structure and data scheme of the delivery profiles Profile #1 and Profile #2 afford the delivery profile analyzer 520 rapid analysis of preliminary inventory locations (e.g. Locations #1 - #2) for the product, as well as rapid analysis of preliminary delivery zones (e.g. Zones #1 - #5 for the product represented by Profile #1, Zones #6 - #8 for the product represented by Profile #2). The delivery profile further provides preliminary shipping rates (e.g. within Options #1 - #8) corresponding to the preliminary inventory locations and delivery zones.

In some embodiments the preliminary information provided by the delivery profiles may be sufficient to determine and communicate fulfillment options to the customer device with no further requests for inventory information or shipping information. For example, an inventory information request and shipping information request may not be needed, based on preliminary information, where a commonly purchased item is always in stock at a location with a fulfillment option consisting of an established shipping rate to any destination. In such an example, fulfillment options may be determined merely by the stored data in the corresponding delivery profile. However, in other embodiments, the information stored in a delivery profile serves as an early or preliminary information source to direct and efficiently confirm the prospective order through targeted, efficient and expedited inventory location requests and shipping information requests, described in further detail herein.

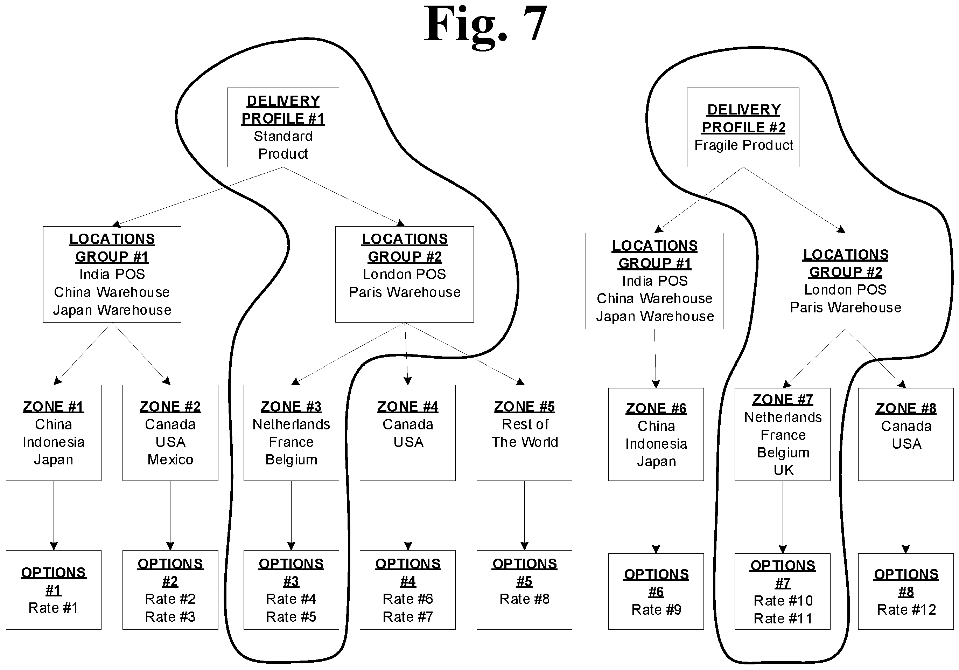

The delivery profiles introduced in Fig. 6 will now be used in embodiments for specific examples of determining fulfillment options for prospective orders illustrated in Figs. 7-10.

Fig. 7 is an illustration of an embodiment processing a prospective order for two different products with two different delivery profiles. More particularly, a standard product delivery profile is illustrated as Profile #1 and a fragile product delivery profile is illustrated as Profile #2. By way of example, both products exist in an online shopping cart with a destination of France. A customer in France is viewing the shopping cart and ready for determination of fulfillment options.

In embodiments, the delivery profile analyzer 520 may analyze the delivery profile Profile #1 representing the standard product and may identify two preliminary inventory locations, Location Group #1 and Location Group #2. However, since Location Group #1 does not have a downstream delivery zone to France, the delivery profile analyzer 520 omits Location Group #1 and continues processing Location Group #2, representing a London POS (point-of-sale) and Paris Warehouse.

Location Group #2, as depicted, is capable of shipping to delivery zone Zone #3 covering the Netherlands, France and Belgium. Delivery Zone #4 and Zone #5 do not correspond to the destination and as such, are omitted or disregarded from further processing.

Options #3 reflects that Rate #4 and Rate #5 are available as fulfillment options for this prospective order.

With a Location Group #2, Zone #3 and Options #3 retrieved from the delivery profile and determined to be preliminary fulfillment options for the first standard product, in embodiments, an inventory information request may be executed for Location Group #2 to confirm available inventory. If such a request is executed, an inventory information response may be received confirming that inventory is available or not available for the standard product. For purposes of the example, it is assumed that inventory is available at Location Group #2 as the preliminary information from the delivery profile Profile #1 suggested.

Having known on a preliminary basis (via the delivery profile) or on a confirmed basis (via the inventory information response) that inventory is available at Location Group #2, a shipping information request may be executed immediately. If such a request is executed, a shipping information response may be received confirming that shipping rates, Rate #4 and Rate #5 are available (e.g. each shipping rate consisting of a shipping provider offering a shipping service at a shipping cost) for the standard product. For purposes of the example, it is assumed that such shipping rates are available under fulfillment Options #3.

With respect to the fragile product represented by delivery profile Profile #2, the above example process is repeated (or, in embodiments, is conducted in parallel for each product). Location Group #1 and Location Group #2 may show inventory on a preliminary basis, but only one inventory location Location Group #2 results in a downstream delivery zone to France. As such, the delivery profile analyzer 520 omits Location Group #1 and continues to process Location Group #2, representing a London POS and Paris warehouse. Location Group #2 is capable of shipping to delivery zone Zone #7 covering the Netherlands, France, Belgium and UK. Options #7 reflects that Rate #10 and Rate #11 are identified as fulfillment options in the preliminary information retrieved from the delivery profile.

Thereafter, similar to the processing of an inventory information request/response and a shipment information request/response for Profile #1 in Profile #2, fulfillment options Options #7 are confirmed via rates Rate #10 and Rate # 11. In embodiments, requests and responses may only be required when the information is not known. For example, if the shipping rate (for example, a flat shipping rate for a product under a certain weight) is known, then no request (such as an API request) is needed.

Thus, the standard product was both identified as being available and deliverable on a preliminary basis by the delivery profile, and thereafter confirmed by a targeted inventory information response and a targeted shipping information response. It is noted that iterative requests and responses were not necessary and significant time and resources were not expended, contrary to the demands imposed by prior art approaches.

In the present example, only one possible inventory location (Location Group #2) and one delivery zone for each product (Zone #3 and Zone #7) was illustrated as available for each respective product. However, the delivery profile analyzer 520 may also consider which inventory source (e.g. London POS or Paris Warehouse) for shipment of each respective product based on a priority basis. Since the shipping rates Rate #4 and Rate #5 are the same from either inventory source (London POS or Paris Warehouse) to the customer, the configured priority basis may select the Paris Warehouse if the priority basis: (i) gives priority to whether the product is shipped from the same country, (ii) gives priority to a shorter geographic distance from the destination, (iii) gives priority to shipping from a warehouse over a retail store, (iv) gives priority to a list as established by a merchant or (v) other considerations of the like.

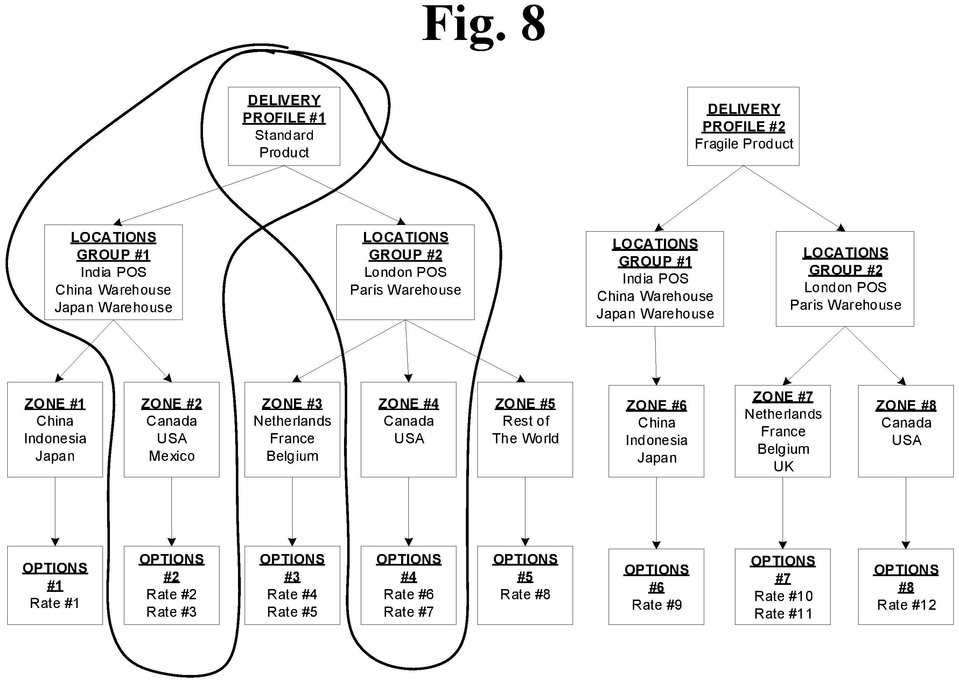

Fig. 8 is an illustration of an embodiment of the processing of a prospective order similar to Fig. 7. However, in this example a single standard product is illustrated by Profile #1, with a destination of the United States of America (USA).

Similar to the processing detail in Fig. 7, the delivery profile analyzer 520 analyzes the delivery profile Profile #1 representing the standard product and identifies two preliminary inventory locations, Location Group #1 and Location Group #2. In this case, both locations have downstream delivery zones to the destination, USA. The delivery profile analyzer 520 continues to process both locations.

Location Group #1 represents an India POS and warehouses in China and Japan, with Location Group #2 representing a London POS and a Paris warehouse. Location Group #1 illustrates downstream delivery Zone #2 with destinations to Canada, USA and Mexico, further having fulfillment options Options #2 available with shipping rates Rate #2 and Rate #3. Additionally, Location Group #2 illustrates downstream delivery Zone #4 with destinations to Canada and USA, further having fulfillment options Options #4 available with shipping rates Rate #6 and Rate #7.

Given this preliminary information derived from the delivery profile Profile #1, similar to the processing of Fig. 7, inventory information requests/responses and shipping information requests/responses can be implemented to confirm inventory information and shipping information as necessary. For purposes of this example, it will be assumed that the preliminary information in the delivery profile is accurate and confirmed by inventory information responses and shipping information responses.

Thus, two fulfillment options Options #2 and Options #4 exist for the same product. In this case the delivery profile analyzer 520 may now determine a recommended option from the two fulfillment options Options #2 and Options #4, namely process four shipping rates Rate #2, Rate #3, Rate #6 and Rate #7, based on a priority basis (e.g. lowest shipping cost). The delivery profile analyzer 520 may determine a single recommended option, or a plurality of recommended options, and thereafter communicate the one or more recommended options to the customer (e.g. via a customer device). In embodiments, the delivery profile analyzer 520 may determine which inventory location among those in the selected inventory Location Group is recommended.

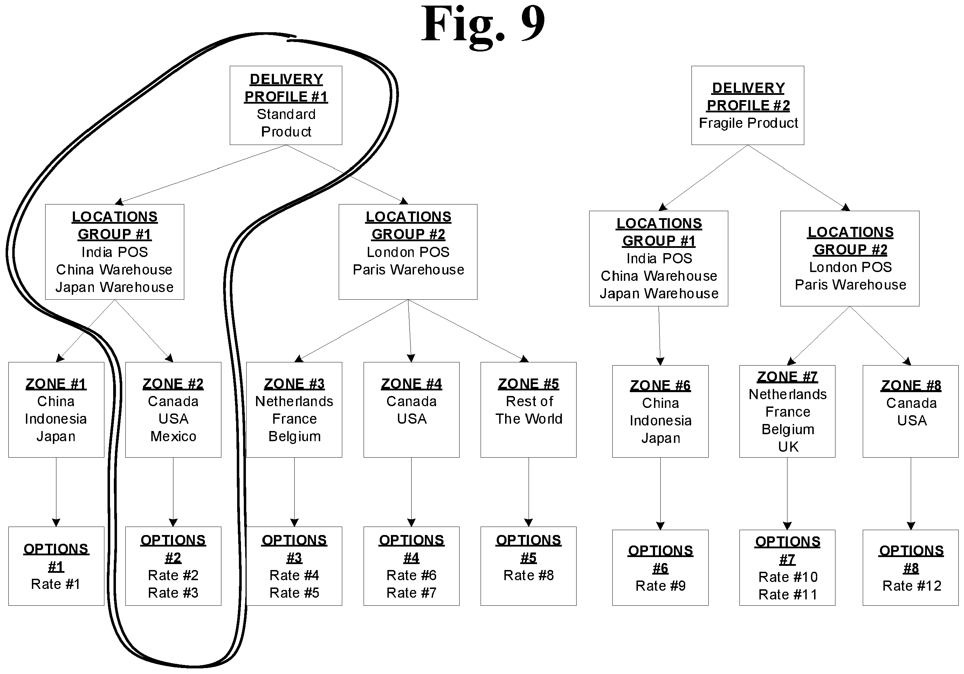

Fig. 9 is an illustration of an embodiment of the processing of a prospective order similar to Fig. 8. However, in this example the single standard product allotment requested is of a significant quantity. The product is similarly illustrated by Profile #1, with a destination of the USA.

The processing of Fig. 9 initially follows the processing of Fig. 8, except that upon an inventory information request and an inventory information response received, it is confirmed that there is not sufficient inventory existing at Location Group #2. As such, all processing of the prospective order necessarily needs to be processed through Location Group #1.

The inventory information response also indicated (not shown) confirms that the India POS does not have inventory, and neither the China Warehouse nor the Japan Warehouse, individually, have enough quantity to fulfill the prospective order. As such, product will need to be shipped to the destination Zone #2 from the warehouses in both China and Japan (as illustrated by the double lines circling the analysis around Location Group #1, Zone #2 and Options #2).

In this example, the preliminary information derived from the delivery profile Profile #1 was not accurate, as the delivery profile suggested that Location Group #2 may have inventory, when in fact it did not (as confirmed by the inventory information response). For this reason, inventory information requests/responses and shipping information requests/responses may be executed to confirm inventory information and shipping information are accurate in real time.

In this case the delivery profile analyzer 520 would now determine a recommended option from the two shipping rates Rate #2 and Rate #3, based on a priority basis, or alternatively may be configured to determine and communicate both shipping rates as a plurality of recommended options.

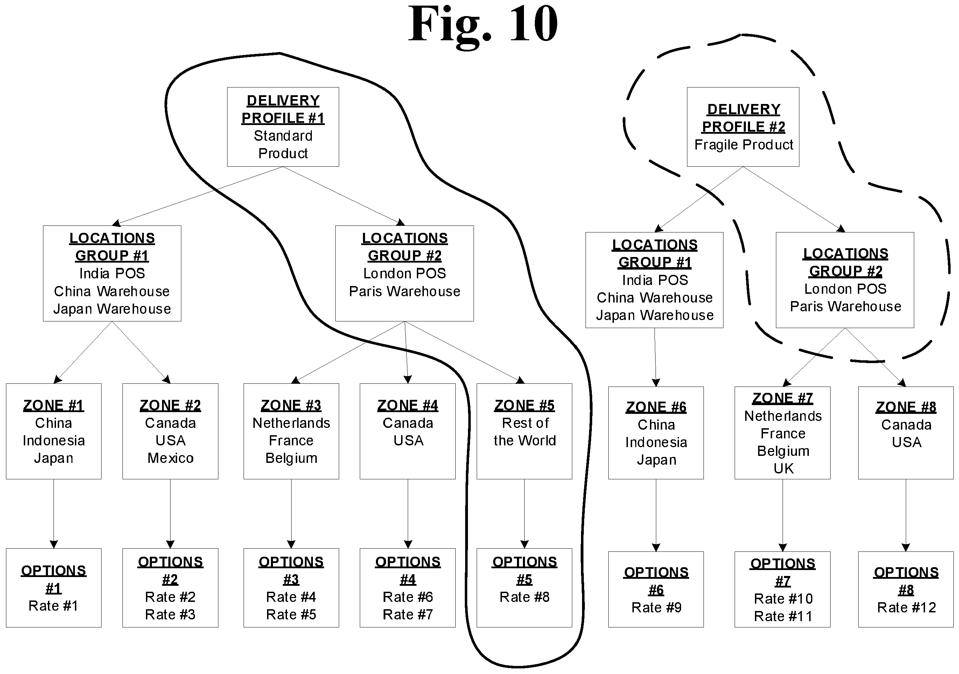

Fig. 10 is an illustration of an embodiment processing a prospective order for two different products with two different delivery profiles. By way of example, both products exist in an online shopping cart with a destination of South Africa.

The delivery profile analyzer 520 analyzes the delivery profile Profile #1 representing the standard product and identifies two preliminary inventory locations, Location Group #1 and Location Group #2. However, since Location Group #1 does not have a downstream delivery zone to South Africa, the delivery profile analyzer 520 omits or disregards Location Group #1 and continues processing Location Group #2, representing a London POS and Paris Warehouse.

Location Group #2, as depicted, is capable of shipping to delivery zone Zone #5 representing the Rest of the World (not represented by other delivery zones), so on a preliminary basis, fulfillment of the standard product to South Africa is possible with shipping rate Rate #8.

For the fragile product under Profile #2, inventory found under respective Location Group #2, but no delivery zone is available to South Africa. As such, there is no fulfillment option available for the fragile product (illustrated as the dotted line surrounding only Profile #2 and Location Group #2).

With a Location Group #2, Zone #5 and Options #5 retrieved from the delivery profile and determined to be a preliminary fulfillment option for the first standard product, an inventory information request may be executed for Location Group #2 to confirm available inventory. If such a request is executed, an inventory information response may be received confirming that inventory is available or not available for the standard product. For purposes of the example, it is assumed that inventory is available at Location Group #2.

Having known on a preliminary basis (via the delivery profile) or on a confirmed basis (via the inventory information response) that inventory is available at Location Group #2 for the standard product, a shipping information request may be executed immediately. If such a request is executed, a shipping information response may be received confirming that shipping rates Rate #8 is available for the standard product. For purposes of the example, it is assumed that such shipping rate is available within fulfillment Options #5. Thus, the standard product is both identified as being available and deliverable on a preliminary basis by the delivery profile, and thereafter confirmed by an inventory information response and a shipping information response.

Therefore, in this example the delivery profile analyzer 520 may determine and communicate to the customer or the customer device 150 that the e-commerce platform 100 may complete fulfillment of the standard product, but may not complete fulfillment of the fragile product.

In the present example, only one possible inventory location (Location Group #2) and one delivery zone for the product (Zone #5) was illustrated as available for the standard product. However, the delivery profile analyzer 520 may also consider which inventory source (e.g. London POS or Paris Warehouse) for shipment of each respective product based on a priority basis. Since the shipping rate (Rate #8) is the same from either inventory source (London POS or Paris Warehouse) to the customer, the configured priority basis may select the Paris Warehouse if the priority basis: (i) gives priority to a shorter geographic distance from the destination, or (ii) gives priority to shipping from a warehouse over a retail store, or other considerations of the like.

In all of the above examples illustrated in Figs. 7-10, the information or data retrieved from the delivery profiles may vary from unverified preliminary information to constantly updated near real-time data. Therefore, if desirable the delivery profile analyzer 520 may immediately determine and communicate fulfillment options without requests for inventory information or shipping information. However, in other embodiments as described throughout this disclosure, the delivery profile analyzer 520 may selectively request inventory information to confirm available inventory reflected in the delivery profile. Likewise, if deemed necessary the delivery profile analyzer 520 may selectively request shipping information to confirm the shipping provider, shipping times and shipping rates reflected in the delivery profile. Such various requests can be performed selectively, individually, in batch format, in serial sequence, simultaneously in parallel, or in other alternative timings depending upon the needs of the particular application.

As can be appreciated, such options whether to make information requests following the retrieval of a delivery profile are performed to balance speed, accuracy and utilization of computing resources. On any prospective order or shopping cart checkout, or any prospective order arising from any channel, regardless of whether requests for inventory information or requests for shipping information are performed, one skilled in the art can appreciate the many benefits afforded by utilizing a product-centric data structure and a delivery profile database containing delivery profiles to improve the determination of fulfillment options.

The methods and systems described herein may be deployed in part or in whole through a machine that executes computer software, program codes, and/or instructions on a processor. The processor may be part of a server, cloud server, client, network infrastructure, mobile computing platform, stationary computing platform, or other computing platform. A processor may be any kind of computational or processing device capable of executing program instructions, codes, binary instructions and the like. The processor may be or include a signal processor, digital processor, embedded processor, microprocessor or any variant such as a co-processor (math co-processor, graphic co-processor, communication co-processor and the like) and the like that may directly or indirectly facilitate execution of program code or program instructions stored thereon. In addition, the processor may enable execution of multiple programs, threads, and codes. The threads may be executed simultaneously to enhance the performance of the processor and to facilitate simultaneous operations of the application. By way of implementation, methods, program codes, program instructions and the like described herein may be implemented in one or more thread. The thread may spawn other threads that may have assigned priorities associated with them; the processor may execute these threads based on priority or any other order based on instructions provided in the program code. The processor may include memory that stores methods, codes, instructions and programs as described herein and elsewhere. The processor may access a storage medium through an interface that may store methods, codes, and instructions as described herein and elsewhere. The storage medium associated with the processor for storing methods, programs, codes, program instructions or other type of instructions capable of being executed by the computing or processing device may include but may not be limited to one or more of a CD-ROM, DVD, memory, hard disk, flash drive, RAM, ROM, cache and the like.

A processor may include one or more cores that may enhance speed and performance of a multiprocessor. In embodiments, the process may be a dual core processor, quad core processors, other chip-level multiprocessor and the like that combine two or more independent cores (called a die).

The methods and systems described herein may be deployed in part or in whole through a machine that executes computer software on a server, cloud server, client, firewall, gateway, hub, router, or other such computer and/or networking hardware. The software program may be associated with a server that may include a file server, print server, domain server, internet server, intranet server and other variants such as secondary server, host server, distributed server and the like. The server may include one or more of memories, processors, computer readable media, storage media, ports (physical and virtual), communication devices, and interfaces capable of accessing other servers, clients, machines, and devices through a wired or a wireless medium, and the like. The methods, programs or codes as described herein and elsewhere may be executed by the server. In addition, other devices required for execution of methods as described in this application may be considered as a part of the infrastructure associated with the server.

The server may provide an interface to other devices including, without limitation, clients, other servers, printers, database servers, print servers, file servers, communication servers, distributed servers and the like. Additionally, this coupling and/or connection may facilitate remote execution of program across the network. The networking of some or all of these devices may facilitate parallel processing of a program or method at one or more location without deviating from the scope of the disclosure. In addition, any of the devices attached to the server through an interface may include at least one storage medium capable of storing methods, programs, code and/or instructions. A central repository may provide program instructions to be executed on different devices. In this implementation, the remote repository may act as a storage medium for program code, instructions, and programs.

The software program may be associated with a client that may include a file client, print client, domain client, internet client, intranet client and other variants such as secondary client, host client, distributed client and the like. The client may include one or more of memories, processors, computer readable media, storage media, ports (physical and virtual), communication devices, and interfaces capable of accessing other clients, servers, machines, and devices through a wired or a wireless medium, and the like. The methods, programs or codes as described herein and elsewhere may be executed by the client. In addition, other devices required for execution of methods as described in this application may be considered as a part of the infrastructure associated with the client.

The client may provide an interface to other devices including, without limitation, servers, other clients, printers, database servers, print servers, file servers, communication servers, distributed servers and the like. Additionally, this coupling and/or connection may facilitate remote execution of program across the network. The networking of some or all of these devices may facilitate parallel processing of a program or method at one or more location without deviating from the scope of the disclosure. In addition, any of the devices attached to the client through an interface may include at least one storage medium capable of storing methods, programs, applications, code and/or instructions. A central repository may provide program instructions to be executed on different devices. In this implementation, the remote repository may act as a storage medium for program code, instructions, and programs.

The methods and systems described herein may be deployed in part or in whole through network infrastructures. The network infrastructure may include elements such as computing devices, servers, routers, hubs, firewalls, clients, personal computers, communication devices, routing devices and other active and passive devices, modules and/or components as known in the art. The computing and/or non-computing device(s) associated with the network infrastructure may include, apart from other components, a storage medium such as flash memory, buffer, stack, RAM, ROM and the like. The processes, methods, program codes, instructions described herein and elsewhere may be executed by one or more of the network infrastructural elements.

The methods, program codes, and instructions described herein and elsewhere may be implemented in different devices which may operate in wired or wireless networks. Examples of wireless networks include 4^{th} Generation (4G) networks (e.g. Long Term Evolution (LTE)) or 5^{th} Generation (5G) networks, as well as non-cellular networks such as Wireless Local Area Networks (WLANs). However, the principles described therein may equally apply to other types of networks.

The operations, methods, programs codes, and instructions described herein and elsewhere may be implemented on or through mobile devices. The mobile devices may include navigation devices, cell phones, mobile phones, mobile personal digital assistants, laptops, palmtops, netbooks, pagers, electronic books readers, music players and the like. These devices may include, apart from other components, a storage medium such as a flash memory, buffer, RAM, ROM and one or more computing devices. The computing devices associated with mobile devices may be enabled to execute program codes, methods, and instructions stored thereon. Alternatively, the mobile devices may be configured to execute instructions in collaboration with other devices. The mobile devices may communicate with base stations interfaced with servers and configured to execute program codes. The mobile devices may communicate on a peer to peer network, mesh network, or other communications network. The program code may be stored on the storage medium associated with the server and executed by a computing device embedded within the server. The base station may include a computing device and a storage medium. The storage device may store program codes and instructions executed by the computing devices associated with the base station.

The computer software, program codes, and/or instructions may be stored and/or accessed on machine readable media that may include: computer components, devices, and recording media that retain digital data used for computing for some interval of time; semiconductor storage known as random access memory (RAM); mass storage typically for more permanent storage, such as optical discs, forms of magnetic storage like hard disks, tapes, drums, cards and other types; processor registers, cache memory, volatile memory, non-volatile memory; optical storage such as CD, DVD; removable media such as flash memory (e.g. USB sticks or keys), floppy disks, magnetic tape, paper tape, punch cards, standalone RAM disks, Zip drives, removable mass storage, off-line, and the like; other computer memory such as dynamic memory, static memory, read/write storage, mutable storage, read only, random access, sequential access, location addressable, file addressable, content addressable, network attached storage, storage area network, bar codes, magnetic ink, and the like.

The methods and systems described herein may transform physical and/or or intangible items from one state to another. The methods and systems described herein may also transform data representing physical and/or intangible items from one state to another, such as from usage data to a normalized usage dataset.

The elements described and depicted herein, including in flow charts and block diagrams throughout the figures, imply logical boundaries between the elements. However, according to software or hardware engineering practices, the depicted elements and the functions thereof may be implemented on machines through computer executable media having a processor capable of executing program instructions stored thereon as a monolithic software structure, as standalone software modules, or as modules that employ external routines, code, services, and so forth, or any combination of these, and all such implementations may be within the scope of the present disclosure. Examples of such machines may include, but may not be limited to, personal digital assistants, laptops, personal computers, mobile phones, other handheld computing devices, medical equipment, wired or wireless communication devices, transducers, chips, calculators, satellites, tablet PCs, electronic books, gadgets, electronic devices, devices having artificial intelligence, computing devices, networking equipment, servers, routers and the like. Furthermore, the elements depicted in the flow chart and block diagrams or any other logical component may be implemented on a machine capable of executing program instructions. Thus, while the foregoing drawings and descriptions set forth functional aspects of the disclosed systems, no particular arrangement of software for implementing these functional aspects should be inferred from these descriptions unless explicitly stated or otherwise clear from the context. Similarly, it will be appreciated that the various steps identified and described above may be varied, and that the order of steps may be adapted to particular applications of the techniques disclosed herein. All such variations and modifications are intended to fall within the scope of this disclosure. As such, the depiction and/or description of an order for various steps should not be understood to require a particular order of execution for those steps, unless required by a particular application, or explicitly stated or otherwise clear from the context.

The methods and/or processes described above, and steps thereof, may be realized in hardware, software or any combination of hardware and software suitable for a particular application. The hardware may include a general-purpose computer and/or dedicated computing device or specific computing device or particular aspect or component of a specific computing device. The processes may be realized in one or more microprocessors, microcontrollers, embedded microcontrollers, programmable digital signal processors or other programmable device, along with internal and/or external memory. The processes may also, or instead, be embodied in an application specific integrated circuit, a programmable gate array, programmable array logic, or any other device or combination of devices that may be configured to process electronic signals. It will further be appreciated that one or more of the processes may be realized as a computer executable code capable of being executed on a machine readable medium.

The computer executable code may be created using a structured programming language such as C, an object oriented programming language such as C++, or any other high-level or low-level programming language (including assembly languages, hardware description languages, and database programming languages and technologies) that may be stored, compiled or interpreted to run on one of the above devices, as well as heterogeneous combinations of processors, processor architectures, or combinations of different hardware and software, or any other machine capable of executing program instructions.

Thus, in one aspect, each method described above, and combinations thereof may be embodied in computer executable code that, when executing on one or more computing devices, performs the steps thereof. In another aspect, the methods may be embodied in systems that perform the steps thereof and may be distributed across devices in a number of ways, or all of the functionality may be integrated into a dedicated, standalone device or other hardware. In another aspect, the means for performing the steps associated with the processes described above may include any of the hardware and/or software described above. All such permutations and combinations are intended to fall within the scope of the present disclosure.

Embodiments of the invention can be described with reference to the following numbered clauses, with preferred features laid out in the dependent clauses:
1. A method of determining an option for fulfillment of a prospective order comprising:
   identifying a product and a destination from the prospective order;
   retrieving a delivery profile, the delivery profile comprising: (i) an inventory location of the product, (ii) a delivery zone where the product can be shipped from the inventory location, and (iii) one or more fulfillment options, wherein the one or more fulfillment options comprises one or more shipping rates to ship the product from the inventory location to the delivery zone; and,
   determining the option from the one or more fulfillment options based upon a priority basis.
2. The method of clause 1, wherein the delivery profile is retrieved from a delivery profile database.
3. The method of clause 1 or clause 2 wherein each shipping rate in the one or more shipping rates comprises a shipping provider, a shipping service and a shipping cost.
4. The method of any one of clauses 1 to 3, wherein the product is a plurality of different products and the delivery profile is a plurality of different delivery profiles corresponding to the plurality of different products.
5. The method of any one of clauses 1 to 4, wherein the inventory location is a plurality of inventory locations.
6. The method of clause 5, wherein the option is a plurality of options based on the plurality of inventory locations.
7. The method of any one of clauses 1 to 6, wherein the delivery zone is a plurality of delivery zones.
8. The method of any one of clauses 1 to 7, wherein the one or more shipping rates is a plurality of shipping rates.
9. The method of clause 8, wherein the option is a plurality of options based on the plurality of shipping rates.
10. The method of any one of clauses 1 to 9, wherein the option for the prospective order comprises no fulfillment options to the destination.
11. The method of any one of clauses 1 to 10, wherein the priority basis is lowest shipping cost.
12. The method of any one of clauses 1 to 11, further comprising:
   communicating the option to a customer device.
13. The method of any one of clauses 1 to 12, further comprising:
   determining an inventory information request to be requested based upon the inventory location, the delivery zone and the one or more fulfillment options of the delivery profile and the destination;
   requesting inventory information via the inventory information request;
   receiving inventory information in response to the inventory information request and,
   wherein the priority basis also considers the inventory information to determine an option.
14. The method of any one of clauses 1 to 13, further comprising:
   determining a shipping information request to be requested based upon the inventory location, the delivery zone and the one or more fulfillment options of the delivery profile and the destination;
   requesting shipping information via the shipping information request;
   receiving shipping information; and,
   wherein the priority basis also considers the shipping information.
15. The method of any one of clauses 1 to 14, further comprising:
   determining an inventory information request to be requested based upon the inventory location, the delivery zone and the one or more fulfillment options of the delivery profile and the destination;
   requesting inventory information via the inventory information request;
   receiving inventory information in response to the inventory information request;
   determining a shipping information request to be requested from the inventory location, the delivery zone and the one or more fulfillment options of the delivery profile, the inventory information received and the destination;
   requesting shipping information via the shipping information request; and,
   wherein the priority basis also considers the inventory information and the shipping information.
16. The method of any one of clauses 1 to 15, further comprising:
   determining an inventory information request to be requested from the inventory location, the delivery zone and the one or more fulfillment options of the delivery profile and the destination;
   requesting inventory information via the inventory information request;
   receiving inventory information in response to the inventory information request regarding the inventory location having available inventory of the product;
   disregarding the inventory location if it does not have available inventory of the product;
   determining a shipping information request to be requested from the inventory location, the delivery zone and the one or more fulfillment options of the delivery profile;
   requesting shipping information via the shipping information request, wherein the shipping information request is made via an API call external to an e-commerce platform;
   receiving shipping information in response to the shipping information request;
   communicating the option to a customer device;
   wherein the delivery profile is retrieved from a delivery profile database;
   wherein the product is a plurality of different products;
   wherein the delivery profile is a plurality of delivery profiles corresponding to the plurality of different products;
   wherein the inventory location is a plurality of inventory locations;
   wherein the delivery zone is a plurality of delivery zones;
   wherein each shipping rate in the one or more shipping rates comprises a shipping provider, a shipping service and a shipping cost;
   wherein the one or more shipping rates is a plurality of shipping rates;
   wherein the shipping information comprises a shipping provider, a shipping service and a shipping cost;
   wherein the shipping information request is a plurality of shipping information requests;
   wherein the priority basis also considers the inventory information and the shipping information; and
   wherein the option for fulfillment of the prospective order is a plurality of options.
17. A method of determining an option for fulfillment of a prospective order in an e-commerce platform comprising:
   identifying the prospective order to deliver one or more products to a destination;
   retrieving one or more delivery profiles, the one or more delivery profiles comprising: (i) one or more inventory locations of the one or more products, (ii) one or more delivery zones where the one or more products can be shipped from the one or more inventory locations, and (iii) one or more fulfillment options, wherein the one or more fulfillment options comprise one or more shipping rates to ship the one or more products from the one or more inventory locations to the one or more delivery zones;
   determining a plurality of shipping information requests to be requested based on the one or more inventory locations, the one or more delivery zones and the one or more fulfillment options of the one or more delivery profiles and the destination;
   requesting shipping information via the plurality of shipping information requests, wherein the plurality of shipping information requests comprise at least one shipping information request that is an API call external to the e-commerce platform;
   receiving shipping information in response to the plurality of shipping information requests; and,
   determining the option from the one or more inventory locations, the one or more delivery zones, the one or more fulfillment options and the shipping information based upon a priority basis.
18. The method of clause 17, wherein the plurality of shipping information requests are made immediately following the determination of utility of the plurality of shipping information requests.
19. The method of clause 17 or clause 18, further comprising:
   determining a plurality of inventory information requests to be requested based upon the one or more inventory locations, the one or more delivery zones and the one or more fulfillment options of the one or more delivery profiles and the destination;
   requesting inventory information via the plurality of inventory information requests;
   receiving inventory information;
   wherein the step of determining a plurality of shipping information requests considers the inventory information to determine the shipping information requests; and,
   wherein the priority basis also considers the inventory information to determine an option.
20. The method of any one of clauses 17 to 19, further comprising:
   determining a plurality of inventory information requests to be requested based upon the one or more inventory locations, the one or more delivery zones and the one or more fulfillment options of the one or more delivery profiles and the destination;
   requesting inventory information via the plurality of inventory information requests;
   receiving inventory information;
   disregarding inventory locations that do not have available inventory of the one or more products;
   communicating the option to a customer device;
   wherein the one or more delivery profiles are retrieved from one or more delivery profile records stored in a delivery profile database;
   wherein a country of the destination is different than at least one of the one or more inventory locations;
   wherein each shipping rate in the one or more shipping rates comprises a shipping provider, a shipping service and a shipping cost; and,
   wherein the priority basis also considers the inventory information and the shipping information.
21. A system for determining an option for fulfillment of a prospective order comprising:
   an e-commerce platform comprising at least one processor and at least one memory, the e-commerce platform adapted to:
   identify a product and a destination from the prospective order;
   retrieve a delivery profile, the delivery profile comprising: (i) an inventory location of the product, (ii) a delivery zone where the product can be shipped from the inventory location, and (iii) one or more fulfillment options, wherein the one or more fulfillment options comprises one or more shipping rates to ship the product from the inventory location to the delivery zone; and,
   determine the option from the one or more fulfillment options based upon a priority basis.
22. The system of clause 21, further comprising a delivery profile database, wherein the delivery profile is retrieved from the delivery profile database.
23. The system of clause 21 or 22 wherein each shipping rate in the one or more shipping rates comprises a shipping provider, a shipping service and a shipping cost.
24. The system of any one of clauses 21 to 23, wherein the product is a plurality of different products and the delivery profile is a plurality of different delivery profiles corresponding to the plurality of different products.
25. The system of any one of clauses 21 to 24, wherein the inventory location is a plurality of inventory locations.
26. The system of clause 25, wherein the option is a plurality of options based on the plurality of inventory locations.
27. The system of any one of clauses 21 to 26, wherein the delivery zone is a plurality of delivery zones.
28. The system of any one of clauses 21 to 27, wherein the one or more shipping rates is a plurality of shipping rates.
29. The system of clause 28, wherein the option is a plurality of options based on the plurality of shipping rates.
30. The system of any one of clauses 21 to 29, wherein the option for the prospective order comprises no fulfillment options to the destination.
31. The system of any one of clauses 21 to 30, wherein the priority basis is lowest shipping cost.
32. The system of any one of clauses 21 to 31, wherein the system is further adapted to:
   communicate the option to a customer device.
33. The system of any one of clauses 21 to 32, wherein the system is further adapted to:
   determine an inventory information request to be requested based upon the inventory location, the delivery zone and the one or more fulfillment options of the delivery profile and the destination;
   request inventory information via the inventory information request;
   receive inventory information in response to the inventory information request and,
   wherein the priority basis also considers the inventory information to determine an option.
34. The system of any one of clauses 21 to 33, wherein the system is further adapted to:
   determine a shipping information request to be requested based upon the inventory location, the delivery zone and the one or more fulfillment options of the delivery profile and the destination;
   request shipping information via the shipping information request;
   receive shipping information; and,
   wherein the priority basis also considers the shipping information.
35. The system of any one of clauses 21 to 34, wherein the system is further adapted to:
   determine an inventory information request to be requested based upon the inventory location, the delivery zone and the one or more fulfillment options of the delivery profile and the destination;
   request inventory information via the inventory information request;
   receive inventory information in response to the inventory information request;
   determine a shipping information request to be requested from the inventory location, the delivery zone and the one or more fulfillment options of the delivery profile, the inventory information received and the destination;
   request shipping information via the shipping information request; and,
   wherein the priority basis also considers the inventory information and the shipping information.
36. The system of any one of clauses 21 to 35, wherein the system is further adapted to:
   determine an inventory information request to be requested from the inventory location, the delivery zone and the one or more fulfillment options of the delivery profile and the destination;
   request inventory information via the inventory information request;
   receive inventory information in response to the inventory information request regarding the inventory location having available inventory of the product;
   disregard the inventory location if it does not have available inventory of the product;
   determine a shipping information request to be requested from the inventory location, the delivery zone and the one or more fulfillment options of the delivery profile;
   request shipping information via the shipping information request, wherein the shipping information request is made via an API call external to an e-commerce platform;
   receive shipping information in response to the shipping information request;
   communicate the option to a customer device;
   wherein the delivery profile is retrieved from a delivery profile database;
   wherein the product is a plurality of different products;
   wherein the delivery profile is a plurality of delivery profiles corresponding to the plurality of different products;
   wherein the inventory location is a plurality of inventory locations;
   wherein the delivery zone is a plurality of delivery zones;
   wherein each shipping rate in the one or more shipping rates comprises a shipping provider, a shipping service and a shipping cost;
   wherein the one or more shipping rates is a plurality of shipping rates;
   wherein the shipping information comprises a shipping provider, a shipping service and a shipping cost;
   wherein the shipping information request is a plurality of shipping information requests;
   wherein the priority basis also considers the inventory information and the shipping information; and
   wherein the option for fulfillment of the prospective order is a plurality of options.
37. A system for determining an option for fulfillment of a prospective order comprising:
   an e-commerce platform comprising at least one processor and at least one memory, the e-commerce platform adapted to:
   identify the prospective order to deliver one or more products to a destination;
   retrieve one or more delivery profiles, the one or more delivery profiles comprising: (i) one or more inventory locations of the one or more products, (ii) one or more delivery zones where the one or more products can be shipped from the one or more inventory locations, and (iii) one or more fulfillment options, wherein the one or more fulfillment options comprise one or more shipping rates to ship the one or more products from the one or more inventory locations to the one or more delivery zones;
   determine a plurality of shipping information requests to be requested based on the one or more inventory locations, the one or more delivery zones and the one or more fulfillment options of the one or more delivery profiles and the destination;
   request shipping information via the plurality of shipping information requests, wherein the plurality of shipping information requests comprise at least one shipping information request that is an API call external to the e-commerce platform;
   receive shipping information in response to the plurality of shipping information requests; and,
   determine the option from the one or more inventory locations, the one or more delivery zones, the one or more fulfillment options and the shipping information based upon a priority basis.
38. The system of clause 37, wherein the plurality of shipping information requests are made immediately following the determination of utility of the plurality of shipping information requests.
39. The system of clause 37 or clause 38, wherein the system is further adapted to:
   determine a plurality of inventory information requests to be requested based upon the one or more inventory locations, the one or more delivery zones and the one or more fulfillment options of the one or more delivery profiles and the destination;
   request inventory information via the plurality of inventory information requests;
   receive inventory information;
   wherein the step to determine a plurality of shipping information requests considers the inventory information to determine the shipping information requests; and,
   wherein the priority basis also considers the inventory information to determine an option.
40. The system of any one of clauses 37 to 39, wherein the system is further adapted to:
   determine a plurality of inventory information requests to be requested based upon the one or more inventory locations, the one or more delivery zones and the one or more fulfillment options of the one or more delivery profiles and the destination;
   request inventory information via the plurality of inventory information requests;
   receive inventory information;
   disregard inventory locations that do not have available inventory of the one or more products;
   communicate the option to a customer device;
   wherein the one or more delivery profiles are retrieved from one or more delivery profile records stored in a delivery profile database;
   wherein a country of the destination is different than at least one of the one or more inventory locations;
   wherein each shipping rate in the one or more shipping rates comprises a shipping provider, a shipping service and a shipping cost; and,
   wherein the priority basis also considers the inventory information and the shipping information.

## Claims

1. A method of determining an option for delivering a product to a destination or customer to fulfill a prospective order comprising:
identifying a product and a destination from the prospective order;
retrieving a delivery profile from a delivery profile database, the delivery profile corresponding to the identified product, the delivery profile comprising: (i) one or more inventory locations of the product, (ii) at least one delivery zone where the product can be shipped from the inventory location, and (iii) one or more shipping rates for one or more shipping providers to ship the product from an inventory location of the one or more inventory locations to the delivery zone; and, determining an option for delivering the product on a priority basis based upon the delivery profile.

2. The method of claim 1, further comprising:
determining whether to send an inventory information request to one or more inventory locations identified in the delivery profile;
when it is determined to send an inventory information request to an inventory location identified in the delivery profile,
sending the inventory information request;
receiving inventory information in response to the request; and
determining an option for delivering the product on a priority basis based on the received inventory information.

3. The method of claim 2, wherein, if received inventory information indicates that inventory of a product is not available at the inventory location, disregarding the inventory location when determining an option for delivering the product.

4. The method of claim 2 or 3, wherein, when sending an inventory information request to two or more inventory locations identified in the delivery profile, sending the inventory location requests in parallel.

5. The method of any of claims 1 to 4, further comprising:
determining whether to send a shipping information request to the one or more shipping providers identified in the delivery profile;
when it is determined to send a shipping information request to a shipping provider identified in the delivery profile,
sending the shipping information request;
receiving shipping information in response to request; and
determining an option for delivering the product on a priority basis based on the received shipping information.

6. The method of any of claims 2, 3 or 4, further comprising:
determining whether to send a shipping information request to a shipping provider located at an inventory location for which inventory information has been received, wherein the determination is based on the received inventory information, and wherein,
if the received inventory information indicates that inventory of a product is available at the inventory location, determining to send a shipping information request to the shipping provider; or
if the received inventory information indicates that inventory of a product is not available at the inventory location, determining not to send a shipping information request to the shipping provider.

7. The method of claim 5 or 6, wherein, when sending a shipping information request to two or more shipping providers identified in the delivery profile, sending the shipping information requests in parallel.

8. The method of any of claims 2 to 7, wherein determining the option for delivery comprises:
when it is determined not to send any information requests,
determining an option for delivering the product on a priority basis from the delivery profile.

9. The method of any preceding claim, wherein the product is a plurality of different products and the delivery profile is a plurality of different delivery profiles corresponding to the plurality of different products, and/or wherein the delivery zone is a plurality of delivery zones.

10. The method of any preceding claim, wherein the inventory location is a plurality of inventory locations and wherein the option is a plurality of options based on the plurality of inventory locations, and/or wherein the one or more shipping rates is a plurality of shipping rates and wherein the option is a plurality of options based on the plurality of shipping rates.

11. The method of claim 1, wherein the option for the prospective order comprises no fulfillment options to the destination.

12. The method of any preceding claim, wherein the priority basis is lowest shipping cost.

13. The method of claim 1, further comprising:
determining an inventory information request to be requested based upon the inventory location, the delivery zone and the one or more shipping rates of the delivery profile;
requesting inventory information via the inventory information request;
receiving inventory information in response to the inventory information request and,
wherein the priority basis also considers the inventory information to determine an option.

14. The method of claim 1 or 12, further comprising:
determining a shipping information request to be requested based upon the inventory location, the delivery zone and the one or more shipping rates of the delivery profile;
requesting shipping information via the shipping information request;
receiving shipping information; and,
wherein the priority basis also considers the shipping information.

15. An apparatus for carrying out the method of any one of claims 1-14.
